(19) **Europäisches Patentamt / European Patent Office / Office européen des brevets**

(11) **EP 4 589 326 A1**

(12) **EUROPEAN PATENT APPLICATION**
published in accordance with Art. 153(4) EPC

(43) Date of publication:
**23.07.2025 Bulletin 2025/30**

(21) Application number: **23896787.1**

(22) Date of filing: **28.11.2023**

(51) International Patent Classification (IPC):
**G01S 5/02** (2010.01)   **H04W 64/00** (2009.01)

(52) Cooperative Patent Classification (CPC):
**G01S 5/02; G01S 19/46; H04W 64/00**

(86) International application number:
**PCT/CN2023/134745**

(87) International publication number:
**WO 2024/114638 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022 CN 202211509436**

(71) Applicant: **Huawei Technologies Co., Ltd.**
**Shenzhen, Guangdong 518129 (CN)**

(72) Inventors:
 • **ZHANG, Jingwei**
  **Shenzhen, Guangdong 518129 (CN)**
 • **CHEN, Ying**
  **Shenzhen, Guangdong 518129 (CN)**
 • **QIAO, Yunfei**
  **Shenzhen, Guangdong 518129 (CN)**
 • **YU, Tianhang**
  **Shenzhen, Guangdong 518129 (CN)**
 • **TIE, Xiaolei**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **POSITIONING METHOD AND APPARATUS**

(57)   This application provides a positioning method and an apparatus. The method includes: A first communication apparatus obtains first information, where the first information includes time difference information and location information for sending and receiving reference signals by the first communication apparatus; the first communication apparatus receives second information from a second communication apparatus and third information from a third communication apparatus, where the second information includes time difference information and location information for sending and receiving reference signals by the second communication apparatus, and the third information includes time difference information for sending and receiving reference signals by the third communication apparatus; and the first communication apparatus positions the third communication apparatus based on the first information, the second information, and the third information. A 3rd communication apparatus is positioned by combining two communication apparatuses. This resolves a problem of positioning and location verification of a communication apparatus in a communication system, and reduces a positioning delay.

EP 4 589 326 A1

200

| First communication apparatus | Second communication apparatus | Third communication apparatus |

S210: Configure a first reference signal pair

S220-1: Send first scheduling information

S220-2: Send second scheduling information

S230-1: Send first indication information

S230-2: Send second indication information

S230-3: Send third indication information

S240: Configure a time window based on the first indication information and the second indication information

S250-1: Send a first downlink reference signal

S250-2: Send a second downlink reference signal

$\Delta_1$

$\Delta_2$

$\Delta_3$

S250-3: Send an uplink reference signal

S260-1: Send third information

S260-2: Send second information

S270: Determine a spatial location of the third communication apparatus

FIG. 5

## Description

This application claims priority to Chinese Patent Application No. 202211509436.4, filed with the China National Intellectual Property Administration on November 29, 2022 and entitled "POSITIONING METHOD AND APPARATUS", which is incorporated herein by reference in its entirety.

## TECHNICAL FIELD

This application relates to the communication field, and more specifically, to a positioning method and an apparatus.

## BACKGROUND

Compared with terrestrial communication, satellite communication has its unique advantages. For example, satellite communication can provide a wider coverage area, and satellite base stations are not vulnerable to natural disasters or external forces. If satellite communication is introduced into a 5th generation (5th Generation, 5G) system and a future evolved network, communication services can be provided for some areas, such as oceans and forests, that cannot be covered by a terrestrial communication network. In addition, reliability of 5G communication can be enhanced, for example, better communication services are ensured for air planes, trains, and users on these transportation means. Further, more data transmission resources are provided for 5G communication, and a network rate is improved. Therefore, supporting both terrestrial communication and satellite communication is an inevitable trend of 5G communication and future communication, and is greatly beneficial in terms of wide coverage, reliability, multi-connectivity, a high throughput, and the like.

In satellite communication, a satellite cell typically covers a large area, and may cross borders to cover a plurality of countries and regions. Therefore, in compliance with laws and regulations of countries or regions, when a satellite provides communication services such as disaster warning, emergency calls, and charging, a location of a terminal device usually needs to be known. In a 5G system, beam-based wireless communication is used in new radio (new radio, NR) to improve communication efficiency on a spectrum with a higher frequency. However, for positioning in the 5G system, for example, a positioning reference signal (positioning reference signal, PRS) is also sent by using a beam. Due to use of beams, in NR, positioning measurement may be performed on a same terminal device by using a plurality of beams sent by a single base station, or positioning measurement may be performed on a same terminal device by using beams sent by different base stations. Round-trip time (round time trip, RTT) is a time period (namely, a propagation delay (propagation delay)) in which a signal sent by a transmitting end is propagated to a receiving end plus a time period in which the receiving end returns a message to the transmitting end. During positioning, the RTT may be used as one of measurement items to determine a device location.

In an existing single-satellite-based terminal device positioning method, a satellite usually needs to be moved to different locations to be equivalent to a plurality of base stations, so that a terminal device is positioned based on known satellite locations and a plurality of pieces of related measurement information. To position a terminal device, at least three times of measurement are usually required, and a large measurement gap is required between different times of measurement. Therefore, single-satellite-based terminal device positioning usually causes a large positioning delay. In addition, location information reported by a terrestrial terminal device may be tampered with, or the reported location information is affected by interference and has a large error. Therefore, a network side usually needs to position the terrestrial terminal device or verify the location information reported by the terrestrial terminal device.

## SUMMARY

This application provides a positioning method and an apparatus. A 3rd communication apparatus is mainly positioned by using two communication apparatuses. Measurement is performed and related information is reported, to resolve a problem of positioning and location verification of the communication apparatus, and reduce a positioning delay.

According to a first aspect, a positioning method is provided. The method may be performed by a communication apparatus, or may be performed by a chip or a circuit configured in a communication apparatus. This is not limited in this application.

The method includes: A first communication apparatus obtains first information, where the first information corresponds to a first reference signal group, and the first reference signal group includes one uplink reference signal, one first downlink reference signal, and one second downlink reference signal; and the first information includes first time difference information and first location information, where the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal; the first communication apparatus receives second information, where the second information corresponds to the first reference signal group; and the second information includes second time difference information and second location information, where the second time difference information indicates a time difference between a time point at which the second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal; the first communication apparatus receives third information, where the third information corresponds to the first reference signal group; and the third information includes third time difference information, where the third time difference information indicates a time difference between a time point at which the third communication apparatus receives the second downlink reference signal and a time point at which the third communication apparatus sends the uplink reference signal; and the first communication apparatus positions the third communication apparatus based on the first information, the second information, and the third information.

According to the solution of this application, a 3rd communication apparatus may be positioned by using two communication apparatuses. Measurement is performed and related information is reported, to resolve a problem of positioning and location verification of the communication apparatus in a communication system, and reduce a positioning delay.

It should be understood that the first communication apparatus and the second communication apparatus may be any device having a wireless transceiver function. The device includes but is not limited to a base station controller (Base Station Controller, BSC), a base transceiver station (Base Transceiver Station, BTS), or the like; may be one antenna panel or a group of antenna panels (including a plurality of antenna panels) of a base station in a 5G system or the like; or may be a satellite or the like.

It should be understood that the third communication apparatus in embodiments of this application may be any terminal device, for example, a user equipment, an access terminal device, a subscriber unit, a subscriber station, a mobile station, a remote station, a remote terminal, a mobile device, a user terminal, a terminal device, a wireless communication device, a user agent, or a user apparatus. Alternatively, the terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in a future evolved public land mobile network (Public Land Mobile Network, PLMN), or the like.

In addition, the third communication apparatus in this application may alternatively be a mobile phone (mobile phone), a smart watch (smart watch), a tablet computer (pad), an unmanned aerial vehicle, an intelligent vehicle, a computer with a wireless transceiver functions, a virtual reality (virtual reality, VR) terminal, an augmented reality (augmented reality, AR) terminal, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), or the like. An application scenario is not limited in embodiments of this application.

In an implementation, the third communication apparatus is a terminal device.

In another implementation, the third communication apparatus is a chip or a chip system in the terminal device.

Optionally, each of the first communication apparatus and the second communication apparatus may be any one of a LEO (low orbit) satellite, an MEO (medium orbit) satellite, and a GEO (geostationary orbit) satellite.

In a possible implementation, in a satellite communication scenario, the first communication apparatus is a satellite currently serving the terminal device, and may also be referred to as a main satellite. The main satellite selects an auxiliary satellite, namely, the second communication apparatus, from satellites that can currently cover the terminal device.

For example, the main satellite selects a satellite closest to the main satellite as the auxiliary satellite, or selects a satellite closest to a cell or a beam position of a UE as the auxiliary satellite. After the auxiliary satellite is determined, the main satellite may transfer location information of the auxiliary satellite, including an ephemeris and orbit information, to the third communication apparatus.

It should be understood that reference signals (including an uplink reference signal and a downlink reference signal) in embodiments of this application are reference signals for positioning the third communication apparatus.

It should be understood that, in embodiments of this application, the "reference signal used for positioning" is uniformly denoted as a "reference signal". However, it cannot be understood as that the "reference signal" includes only a reference signal dedicated for positioning (positioning reference signal, PRS). Details are not described below again.

Optionally, the reference signal for positioning includes but is not limited to a positioning reference signal PRS, a demodulation reference signal (demodulation reference signal, DMRS), a tracking reference signal (tracking reference signal, TRS), and a channel state information reference signal (channel state information reference signal, CSI-RS).

With reference to the first aspect, in some implementations of the first aspect, the first downlink reference signal and the second downlink reference signal are same reference signals.

It should be understood that the first communication apparatus simultaneously sends downlink reference signals to the second communication apparatus and the third communication apparatus. The downlink reference signal sent by the first communication apparatus to the second communication apparatus and the downlink reference signal sent by the first communication apparatus to the third communication apparatus may be the same or different.

Optionally, the downlink reference signal sent by the first communication apparatus to the second communication apparatus may be a signal in any form, for example, a laser signal.

In a possible implementation, the first communication apparatus sends first indication information to the second communication apparatus and the third communication apparatus, where the first indication information indicates a configuration of the first reference signal group.

In a possible implementation, the first communication apparatus sends second indication information to the second communication apparatus, where the second indication information indicates geographical location information, and the geographical location information indicates a cell identity (identity, ID) or a beam position ID of the third communication apparatus.

Optionally, the second indication information further indicates an ephemeris of the first communication apparatus, and the ephemeris of the first communication apparatus includes information about an operating orbit of the first communication apparatus.

In a possible implementation, the first communication apparatus sends third indication information to the third communication apparatus, where the third indication information indicates location information of the second communication apparatus, and the location information of the second communication apparatus includes an ephemeris and orbit information of the second communication apparatus.

By way of example, and not limitation, in this application, the first indication information, the second indication information, and the third indication information may be carried in any common type of message separately or in a combination manner, for example, radio resource control (Radio Resource Control, RRC) signaling, a MAC control element (MAC Control Element, MAC CE), uplink control information (Uplink Control Information, UCI), and a system message (System Information Block, SIB).

In a possible implementation, the first communication apparatus sends first scheduling information to the second communication apparatus, where the first scheduling information indicates the second communication apparatus to obtain and send the second information; and the first communication apparatus sends second scheduling information to the third communication apparatus, where the second scheduling information indicates the third communication apparatus to obtain and send the third information.

By way of example, and not limitation, in this application, the first scheduling information and the second scheduling information may be carried in any common type of message separately or in a combination manner, for example, RRC signaling, a MAC CE, UCI, or a SIB.

According to a second aspect, a positioning method is provided. The method may be performed by a communication apparatus, or may be performed by a chip or a circuit configured in a communication apparatus. This is not limited in this application.

The method includes: A second communication apparatus obtains second information, where the second information corresponds to a first reference signal group; the first reference signal group includes one uplink reference signal, one first downlink reference signal, and one second downlink reference signal; and the second information includes second time difference information and second location information, where the second time difference information indicates a time difference between a time point at which the second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal; the second communication apparatus sends the second information to a first communication apparatus, where the first communication apparatus is configured to position a third communication apparatus based on first information, the second information, and third information, where the first information corresponds to the first reference signal group, and the first information includes first time difference information and first location information, where the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal; and the third information corresponds to the first reference signal group, and the third information includes third time difference information, where the third time difference information indicates a time difference between a time point at which the third communication apparatus receives the second downlink reference signal and a time point at which the third communication apparatus sends the uplink reference signal.

According to the solution of this application, a 3rd communication apparatus may be positioned by using two communication apparatuses. Measurement is performed and related information is reported, to resolve a problem of positioning and location verification of the communication apparatus in a communication system, and reduce a positioning delay.

With reference to the second aspect, in some implementations of the second aspect, the first downlink reference signal and the second downlink reference signal are same reference signals.

In a possible implementation, the second communication apparatus receives first scheduling information, where the first scheduling information indicates the second communication apparatus to obtain and send the second information.

In a possible implementation, the second communication apparatus receives first indication information, where the first indication information indicates a configuration of the first reference signal group.

In a possible implementation, the second communication apparatus receives second indication information, where the second indication information indicates geographical location information, and the geographical location information indicates a cell identity ID or a beam position ID of the third communication apparatus.

Optionally, the second indication information further indicates an ephemeris of the first communication apparatus, and the ephemeris of the first communication apparatus includes information about an operating orbit of the first communication apparatus.

In a possible implementation, the second communication apparatus determines a first time window based on the first indication information and the second indication information, where the first time window is used for receiving the first reference signal group; and the second communication apparatus receives the first reference signal group in the first time window.

According to a third aspect, a positioning method is provided. The method may be performed by a third communication apparatus, or may be performed by a chip or a circuit configured in the third communication apparatus. This is not limited in this application.

The method includes: A third communication apparatus obtains third information, where the third information corresponds to a first reference signal group; the first reference signal group includes one uplink reference signal, one first downlink reference signal, and one second downlink reference signal; and the third information includes third time difference information, where the third time difference information indicates a time difference between a time point at which the third communication apparatus receives the second downlink reference signal and a time point at which the third communication apparatus sends the uplink reference signal; and the third communication apparatus sends the third information to a first communication apparatus, where the first communication apparatus is configured to position the third communication apparatus based on first information, second information, and the third information, where the first information corresponds to the first reference signal group, and the first information includes first time difference information and first location information, where the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal; and the second information corresponds to the first reference signal group, and the second information includes second time difference information and second location information, where the second time difference information indicates a time difference between a time point at which a second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal.

According to the solution of this application, a 3rd communication apparatus may be positioned by using two communication apparatuses. Measurement is performed and related information is reported, to resolve a problem of positioning and location verification of the communication apparatus in a communication system, and reduce a positioning delay.

With reference to the third aspect, in some implementations of the third aspect, the first downlink reference signal and the second downlink reference signal are same reference signals.

In a possible implementation, the third communication apparatus receives first indication information, where the first indication information indicates a configuration of the first reference signal group.

In a possible implementation, the third communication apparatus receives third indication information, where the third indication information indicates location information of the second communication apparatus, and the location information of the second communication apparatus includes an ephemeris and orbit information of the second communication apparatus.

In a possible implementation, the third communication apparatus receives second scheduling information, where the second scheduling information indicates the third communication apparatus to obtain and send the third information.

According to a fourth aspect, a positioning apparatus is provided. The apparatus includes: an obtaining module, configured to obtain first information, where the first information corresponds to a first reference signal group, and the first reference signal group includes one uplink reference signal, one first downlink reference signal, and one second downlink reference signal; and the first information includes first time difference information and first location information, where the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal; a transceiver module, configured to receive second information, where the second information corresponds to the first reference signal group; and the second information includes second time difference information and second location information, where the second time difference information indicates a time difference between a time point at which the second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal, where the transceiver module is further configured to receive third information, where the third information corresponds to the first reference signal group; and the third information includes third time difference information, where the third time difference information indicates a time difference between a time point at which the third communication apparatus receives the second downlink reference signal and a time point at which the third communication apparatus sends the uplink reference signal; and a processing module, configured to position the third communication apparatus based on the first information, the second information, and the third information.

With reference to the fourth aspect, in some implementations of the fourth aspect, the first downlink reference signal and the second downlink reference signal are same reference signals.

In a possible implementation, the transceiver module is further configured to send first indication information to the second communication apparatus and the third communication apparatus, where the first indication information indicates a configuration of the first reference signal group.

In a possible implementation, the transceiver module is further configured to send second indication information to the second communication apparatus, where the second indication information indicates geographical location information, and the geographical location information indicates a cell identity ID or a beam position ID of the third communication apparatus.

In a possible implementation, the second indication information further indicates an ephemeris of the first communication apparatus, and the ephemeris of the first communication apparatus includes information about an operating orbit of the first communication apparatus.

In a possible implementation, the transceiver module is further configured to send third indication information to the third communication apparatus, where the third indication information indicates location information of the second communication apparatus, and the location information of the second communication apparatus includes an ephemeris and orbit information of the second communication apparatus.

In a possible implementation, the transceiver module is further configured to send first scheduling information to the second communication apparatus, where the first scheduling information indicates the second communication apparatus to obtain and send the second information; and the transceiver module is further configured to send second scheduling information to the third communication apparatus, where the second scheduling information indicates the third communication apparatus to obtain and send the third information.

According to a fifth aspect, a positioning apparatus is provided. The apparatus includes: an obtaining module, configured to obtain second information, where the second information corresponds to a first reference signal group; the first reference signal group includes one uplink reference signal, one first downlink reference signal, and one second downlink reference signal; and the second information includes second time difference information and second location information, where the second time difference information indicates a time difference between a time point at which a second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal; and a transceiver module, configured to send the second information to a first communication apparatus, where the first communication apparatus is configured to position a third communication apparatus based on the first information, the second information, and third information, where the first information corresponds to the first reference signal group, and the first information includes first time difference information and first location information, where the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal; and the third information corresponds to the first reference signal group, and the third information includes third time difference information, where the third time difference information indicates a time difference between a time point at which the third communication apparatus receives the second downlink reference signal and a time point at which the third communication apparatus sends the uplink reference signal.

With reference to the fifth aspect, in some implementations of the fifth aspect, the first downlink reference signal and the second downlink reference signal are same reference signals.

In a possible implementation, the transceiver module is further configured to receive first scheduling information, where the first scheduling information indicates the second communication apparatus to obtain and send the second information.

In a possible implementation, the transceiver module is further configured to receive first indication information, where the first indication information indicates a configuration of the first reference signal group.

In a possible implementation, the transceiver module is further configured to receive second indication information, where the second indication information indicates geographical location information, and the geographical location information indicates a cell identity ID or a beam position ID of the third communication apparatus.

In a possible implementation, the second indication information further indicates an ephemeris of the first communication apparatus, and the ephemeris of the first communication apparatus includes information about an operating orbit of the first communication apparatus.

In a possible implementation, the apparatus further includes a processing unit, configured to determine a first time window based on the first indication information and the second indication information, where the first time window is used for receiving the first reference signal group; and
the transceiver module receives the first reference signal group in the first time window.

According to a sixth aspect, a positioning apparatus is provided. The apparatus includes: an obtaining module, configured to obtain third information, where the third information corresponds to a first reference signal group; the first reference signal group includes one uplink reference signal, one first downlink reference signal, and one second downlink reference signal; and the third information includes third time difference information, where the third time difference information indicates a time difference between a time point at which the third communication apparatus receives the second downlink reference signal and a time point at which the third communication apparatus sends the uplink reference signal; and a transceiver module, configured to send the third information to a first communication apparatus, where the first communication apparatus is configured to position the third communication apparatus based on first information, second information, and the third information, where the first information corresponds to the first reference signal group, and the first information includes first time difference information and first location information, where the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal; and the second information corresponds to the first reference signal group, and the second information includes second time difference information and second location information, where the second time difference information indicates a time difference between a time point at which a second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal.

In a possible implementation, the first downlink reference signal and the second downlink reference signal are same reference signals.

In a possible implementation, the transceiver module is further configured to receive first indication information, where the first indication information indicates a configuration of the first reference signal group.

In a possible implementation, the transceiver module is further configured to receive third indication information, where the third indication information indicates location information of the second communication apparatus, and the location information of the second communication apparatus includes an ephemeris and orbit information of the second communication apparatus.

In a possible implementation, the transceiver module is further configured to receive second scheduling information, where the second scheduling information indicates the third communication apparatus to obtain and send the third information.

According to a seventh aspect, a wireless communication apparatus is provided. The apparatus includes modules or units configured to perform the method according to any one of the first aspect or the possible implementations of the first aspect.

According to an eighth aspect, a wireless communication apparatus is provided. The apparatus includes modules or units configured to perform the method according to any one of the second aspect or the possible implementations of the second aspect.

According to a ninth aspect, a wireless communication apparatus is provided. The apparatus includes modules or units configured to perform the method according to any one of the third aspect or the possible implementations of the third aspect.

According to a tenth aspect, a communication device is provided. The device includes a processor. The processor is coupled to a memory, and may be configured to perform the method according to the first aspect and the possible implementations of the first aspect or the second aspect and the possible implementations of the second aspect. In a possible implementation, the communication device further includes the memory. In a possible implementation, the communication device further includes a communication interface, and the processor is coupled to the communication interface. In a possible implementation, the communication device further includes a communication interface, and the processor is coupled to the communication interface.

In an implementation, the communication device is a satellite. When the communication device is the satellite, the communication interface may be a transceiver or an input/output interface.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eleventh aspect, a communication device is provided. The device includes a processor. The processor is coupled to a memory, and may be configured to execute instructions in the memory, to implement the method according to the third aspect and the possible implementations of the third aspect. In a possible implementation, the communication device further includes the memory. In a possible implementation, the communication device further includes a communication interface, and the processor is coupled to the communication interface. In a possible implementation, a transceiver may be a transceiver circuit. In a possible implementation, an input/output interface may be an input/output circuit.

In an implementation, the communication device is a terminal device. When the communication device is the terminal device, the communication interface may be a transceiver or an input/output interface. In a possible implementation, a transceiver may be a transceiver circuit. In a possible implementation, an input/output interface may be an input/output circuit.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a twelfth aspect, a communication apparatus is provided. The apparatus includes an input circuit, an output circuit, and a processing circuit. The processing circuit is configured to receive a signal through the input circuit, and transmit a signal through the output circuit, to implement the method according to any one of the first aspect, the second aspect, or the third aspect, and the possible implementations of the aspects.

In a specific implementation process, the communication apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example without limitation to, a receiver, and a signal output by the output circuit may be output to and transmitted by, for example without limitation to, a transmitter; and the input circuit and the output circuit may be different circuits or may be a same circuit. In this case, the circuit is used as the input circuit and the output circuit respectively at different moments. Specific implementations of the processor and the various circuits are not limited in embodiments of this application.

According to a thirteenth aspect, a processing apparatus is provided. The apparatus includes a processor and a memory. The processor is configured to: read instructions stored in the memory, receive a signal through a receiver, and transmit a signal through a transmitter, to perform the method according to any one of the first aspect, the second aspect, or the third aspect, and the possible implementations of the aspects.

In a possible implementation, there are one or more processors, and there are one or more memories.

In a possible implementation, the memory may be integrated with the processor, or the memory and the processor are disposed separately.

In a specific implementation process, the memory may be a non-transitory (non-transitory) memory, for example, a read-only memory (read-only memory, ROM). The memory and the processor may be integrated into one chip, or may be separately disposed on different chips. A type of the memory and a manner in which the memory and the processor are disposed are not limited in this embodiment of this application.

It should be understood that, a related data exchanging process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processor in the foregoing aspect may be a chip, and the processor may be implemented by hardware or software. When the processor is implemented by the hardware, the processor may be a logic circuit, an integrated circuit, or the like; or when the processor is implemented by the software, the processor may be a general-purpose processor, and is implemented by reading software code stored in the memory. The memory may be integrated in the processor, or located outside the processor and exist separately.

According to a fourteenth aspect, a processing apparatus is provided. The apparatus includes a communication interface and a processing circuit. The communication interface is configured to obtain to-be-processed data. The processing circuit is configured to process the to-be-processed data according to the method in any one of the possible implementations of the first aspect or the second aspect.

According to a fifteenth aspect, a processing apparatus is provided. The apparatus includes a communication interface and a processing circuit. The communication interface is configured to send indication information according to the method in any one of the possible implementations of the third aspect. The processing circuit is configured to generate the indication information.

According to a sixteenth aspect, a computer program product is provided. The computer program product includes a computer program (which may also be referred to as code or instructions). When the computer program is run, a computer is enabled to perform the method according to any one of the first aspect, the second aspect, or the third aspect, and the possible implementations of the aspects.

According to a seventeenth aspect, a computer-readable medium is provided. The computer-readable medium stores a computer program (which may also be referred to as code or instructions). When the computer program is run on a computer, the computer is enabled to perform the method according to any one of the first aspect, the second aspect, or the third aspect, and the possible implementation of the aspects.

According to an eighteenth aspect, a communication system is provided. The system includes the foregoing first communication apparatus, second communication apparatus, and third communication apparatus.

## BRIEF DESCRIPTION OF DRAWINGS

FIG. 1 is a diagram of an architecture of NTN communication;
FIG. 2 is a diagram of an example of a communication system applicable to a technical solution of this application;
FIG. 3 is a diagram of an architecture of an IAB system applicable to a technical solution of this application;
FIG. 4 is a diagram of composition of an IAB node;
FIG. 5 is a schematic flowchart of an example of a technical solution according to this application;
FIG. 6 is a schematic flowchart of another example of a technical solution according to this application;
FIG. 7 is a schematic block diagram of a communication apparatus according to an embodiment of this application;
FIG. 8 is a schematic block diagram of another communication apparatus according to an embodiment of this application;
FIG. 9 is a schematic block diagram of a terminal device according to an embodiment of this application; and
FIG. 10 is a schematic block diagram of a communication apparatus according to an embodiment of this application.

## DESCRIPTION OF EMBODIMENTS

The following describes the technical solutions of this application with reference to the accompanying drawings.

The technical solutions in embodiments of this application may be applied to various communication systems, for example, global system for mobile communications (Global System for Mobile communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a machine to machine (machine to machine, M2M) communication system, a non-terrestrial network (non-terrestrial network, NTN) system, a 5th generation (5th Generation, 5G) mobile communication system, a new radio (New Radio, NR) system, or a future wireless communication system. The NTN system may also be referred to as a satellite communication system. In addition, the non-terrestrial communication system may further include a high altitude platform station (high altitude platform station, HAPS) communication system.

The NTN system refers to a communication network in which an air platform or a space platform is used as a relay node of a transmission device, or a base station. The air platform or the space platform includes, but not limited to, an uncrewed aerial vehicle, a hot air balloon, an airplane, a satellite, and the like.

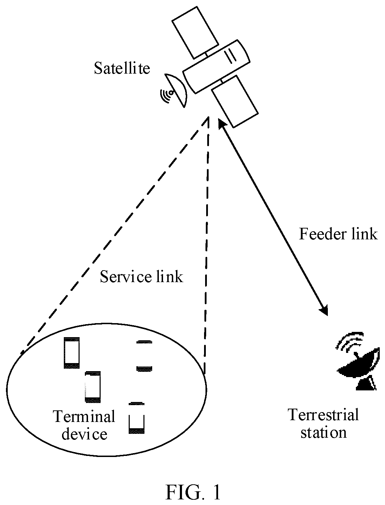

FIG. 1 is a diagram of an architecture of NTN communication. As shown in FIG. 1, satellite communication is used as an example. In this scenario, a terrestrial station (gateway, GW), a satellite, a terminal device (user equipment, UE), and the like may be included. A terrestrial station in an NTN system can provide a function similar to that of a gateway in a terrestrial communication system, for example, establishing a connection to a UE and communicating with a server. For distinction from the terrestrial communication system, the gateway is referred to as a terrestrial station herein. The gateway also has functions such as monitoring and fault query for a satellite, and packet switching and interface protocol conversion for communication data. The terrestrial station is connected to a core network. A link between the terrestrial station and the satellite is referred to as a feeder link (feeder link). A link between the satellite and the user equipment is referred to as a service link (service link). The satellite operates in a transparent (transparent) transmission mode, to be specific, the satellite functions as a relay (relay) to perform radio frequency filtering and amplification and regenerate a signal.

The UE may include various mobile terminals, for example, a mobile satellite phone; or may include various fixed terminals, for example, a communication terrestrial station.

It should be understood that the UE in embodiments of this application may be any terminal device, for example, a user equipment, an access terminal, a subscriber unit, a subscriber station, a mobile station, a remote station, a remote terminal, a mobile device, a user terminal, a terminal device, a wireless communication device, a user agent, or a user apparatus. The terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in a future evolved public land mobile network (Public Land Mobile Network, PLMN), or the like. This is not limited in embodiments of this application.

The terminal device in embodiments of this application may be a mobile phone (mobile phone), a smart watch (smart watch), a tablet computer (pad), a computer with a wireless transceiver functions, a virtual reality (virtual reality, VR) terminal, an augmented reality (augmented reality, AR) terminal, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), or the like. An application scenario is not limited in embodiments of this application.

It should be understood that an example of an NTN communication scenario is described in FIG. 1. In embodiments of this application, an example in which a communication apparatus is a satellite is used. However, the communication apparatus in embodiments of this application is not limited thereto. Alternatively, the communication apparatus in this application may be a terrestrial station, a high altitude platform, an unmanned aerial vehicle in NTN communication, a terminal device that undertakes a base station function in device-to-device (Device-to-Device, D2D) communication, or the like.

In addition, the communication apparatus in embodiments of this application may be a device configured to communicate with a terminal device. The communication apparatus in embodiments of this application may also be referred to as a network device. The communication apparatus may be a base transceiver station (Base Transceiver Station, BTS) in a global system for mobile communications (Global System for Mobile communications, GSM) system or a code division multiple access (Code Division Multiple Access, CDMA) system, may be a NodeB (NodeB, NB) in a wideband code division multiple access (Wideband Code Division Multiple Access, WCDMA) system, may be an evolved NodeB (Evolved NodeB, eNB or eNodeB) in an LTE system, or may be a radio controller in a cloud radio access network (Cloud Radio Access Network, CRAN) scenario. Alternatively, the communication apparatus may be a relay station, an access point, a vehicle-mounted device, a wearable device, a communication apparatus in a 5G network, a communication apparatus in a future evolved PLMN network, or the like. This is not limited in embodiments of this application.

It should be understood that a communication apparatus in the wireless communication system may be any device that has a wireless transceiver function. The device includes but is not limited to a base station controller (Base Station Controller, BSC), a base transceiver station (Base Transceiver Station, BTS), or the like; may be one antenna panel or a group of antenna panels (including a plurality of antenna panels) of a base station in a 5G system or the like; or may be a satellite or the like.

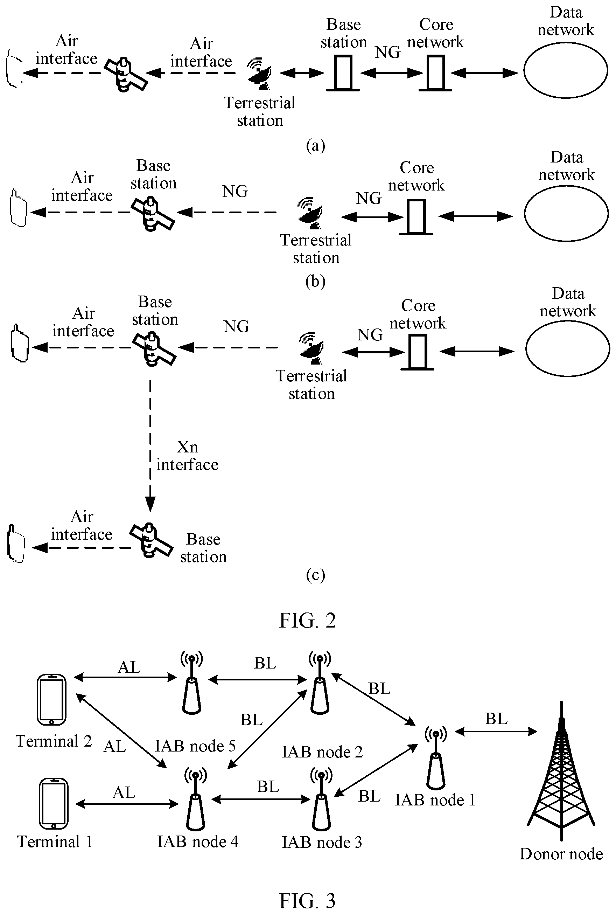

The solutions provided in this application may be applied to a satellite communication scope. For example, members of the 3GPP integrate satellite communication and 5G technologies. FIG. 2 shows a network application architecture of the technology. A terrestrial mobile terminal device UE accesses a network through air interfaces, where the air interfaces may be various types of air interfaces, for example, a 5G air interface. As shown in (b) in FIG. 2, a base station may be deployed on a satellite. Alternatively, as shown in (a) in FIG. 2, a base station may be deployed on the ground and connected to a terrestrial station that communicates with a satellite. The satellite is connected to the terrestrial station via a wireless link. The terrestrial station and a terrestrial base station are connected to a core network through a wired or wireless link. There may be a wireless link between satellites. As shown in (c) in FIG. 2, if satellites have only a transparent transmission and forwarding function (that is, corresponding base stations are deployed on the ground), only the transparent transmission and forwarding function is implemented between the satellites; or if base stations or some functions of the base stations are deployed on satellites, signaling exchanging and user data transmission between the base stations may be completed between the satellites. Network elements and interfaces between the network elements in the figure are described as follows.

Terminal device: The terminal device includes a mobile device that supports new radio, for example, a mobile device such as a mobile phone or a pad. The terminal device may access a satellite network through an air interface and initiate a service such as a call or internet access.

Base station: It mainly provides a wireless access service, schedules a wireless resource for the accessed terminal device, and provides a reliable wireless transmission protocol, data encryption protocol, and the like.

Core network: It provides services such as user access control, mobility management, session management, user security authentication, and charging. It includes a plurality of functional units, which can be classified into control-plane and data-plane functional entities. An access and mobility management unit (AMF) is responsible for user access management, security authentication, and mobility management. A user plane unit (UPF) is responsible for managing functions such as user plane data transmission and traffic statistics collection.

Terrestrial station: It is responsible for forwarding signaling and service data between a satellite base station and a 5G core network.

Air interface: It is a wireless link between the terminal device and the base station.

Xn interface: It is an interface between 5G base stations, and is mainly used for signaling exchanging such as a handover.

NG interface: It is an interface between the 5G base station and the 5G core network, and is mainly used for exchanging signaling such as NAS signaling of the core network and service data of a user.

In view of a high bandwidth trend of a wireless network, an integrated access and backhaul (Integrated Access and Backhaul, IAB) solution is considered to be introduced in 5G new radio (new radio, NR) to further reduce deployment costs and improve deployment flexibility, so as to introduce an integrated access and backhaul relay. In this application, a relay node supporting integrated access and backhaul is referred to as an IAB node (IAB node) to distinguish from an LTE (long term evolution, LTE) relay, and a system including the IAB node is also referred to as a relay system.

In a satellite communication scenario, the solutions provided in this application may also be applied to the relay system.

It should be understood that names of all nodes and messages in this application are merely names specified for ease of description in this application, and may be different in an actual network. It should not be understood that the names of all the nodes and the messages are limited in this application. On the contrary, any name that has a function that is the same as or similar to that of the node or the message used in this application is considered as a method or an equivalent replacement in this application, and falls within the protection scope of this application. Details are not described below again.

To design a flexible and convenient access and backhaul solution, a wireless transmission solution is used for both an access link (access link, AL) and a backhaul link (backhaul link, BL) in an IAB scenario.

In a network including an IAB node (referred to as an IAB network for short below), the IAB node may provide a wireless access service for a terminal device, and is connected to a donor node (donor node) via a wireless backhaul link for transmission of service data of a user. For example, the donor node may be a donor base station. The donor node may be referred to as an IAB donor (IAB donor) or a DgNB (namely, a donor gNodeB) for short in a 5G network. The donor node may be a complete entity, or may be a form in which a central unit (centralized unit, CU) (which is referred to as a donor-CU or a CU for short in this specification) and a distributed unit (distributed unit, DU) (which is referred to as a donor-DU for short in this specification) are separated, in other words, the donor node includes the donor-CU and the donor-DU. In embodiments of this application and the accompanying drawings, an example in which a donor node includes a donor-CU and a donor-DU is used to describe the method provided in embodiments of this application.

The donor-CU may alternatively be in a form in which a user plane (User plane, UP) (which is referred to as a CU-UP for short in this specification) and a control plane (Control plane, CP) (which is referred to as a CU-CP for short in this specification) are separated, in other words, the donor-CU includes the CU-CP and the CU-UP.

The IAB node is connected to a core network through the donor node via a wired link. For example, in a 5G standalone architecture, an IAB node is connected to a core network (5G core, 5GC) of a 5G network through a donor node via a wired link. In a 5G non-standalone architecture, an IAB node is connected to an evolved packet core (evolved packet core, EPC) through an eNB on a control plane, and is connected to the EPC through a donor node and an eNB on a user plane.

To ensure service transmission reliability, an IAB network supports multi-hop IAB-node networking and multi-connectivity IAB-node networking. Therefore, there may be a plurality of transmission paths between a terminal device and a donor node. On one path, there is a determined hierarchical relationship between IAB nodes, and between an IAB node and a donor node serving the IAB node. Each IAB node considers, as a parent node, a node providing a backhaul service for the IAB node. Accordingly, each IAB-node may be considered as a child node of the parent node of the IAB-node.

For example, refer to FIG. 3. A parent node of an IAB node 1 is a donor node, the IAB node 1 is a parent node of an IAB node 2 and an IAB node 3, both the IAB node 2 and the IAB node 3 are parent nodes of an IAB node 4, and a parent node of an IAB node 5 is the IAB node 3. An uplink data packet of the terminal device may be transmitted to the donor node through one or more IAB nodes, and then sent by the donor node to a mobile gateway device (for example, a UPF network element in a 5G network). A downlink data packet is received by the donor node from the mobile gateway device, and then sent to the terminal device through one or more IAB nodes. There are two available paths for data packet transmission between a terminal device 1 and the donor node: the terminal device 1→the IAB node 4→the IAB node 3→the IAB node 1→the donor node, and the terminal device 1→the IAB node 4→the IAB node 2-the IAB node 1→the donor node. There are three available paths for data packet transmission between a terminal device 2 and the donor node: the terminal device 2-the IAB node 4→the IAB node 3→the IAB node 1→the donor node, the terminal device 2→the IAB node 4→the IAB node 2-the IAB node 1→the donor node, and the terminal device 2-the IAB node 5→the IAB node 2-the IAB node 1→the donor node.

It may be understood that, in the IAB network, one transmission path between the terminal device and the donor node may include one or more IAB nodes. Each IAB-node needs to maintain a wireless backhaul link to the parent node and a wireless link to the child node. If one IAB node is a node accessed by the terminal device, a wireless access link exists between the IAB node and a child node (namely, the terminal device). If one IAB node is a node that provides a backhaul service for another IAB node, a wireless backhaul link exists between the IAB node and a child node (namely, the another IAB node). For example, refer to FIG. 3. On the path "the terminal device 1→the IAB node 4→the IAB node 3→the IAB node 1→the donor node", the terminal device 1 accesses the IAB node 4 through a wireless access link, the IAB node 4 accesses the IAB node 3 via a wireless backhaul link, the IAB node 3 accesses the IAB node 1 via a wireless backhaul link, and the IAB node 1 accesses the donor node via a wireless backhaul link.

For example, the IAB node may be a device such as a customer premises equipment (customer premises equipment, CPE) or a residential gateway (residential gateway, RG). In this case, the method provided in embodiments of this application may be applied to a home access (home access) scenario.

The foregoing IAB networking scenario is merely an example. In an IAB scenario in which multi-hop and multi-connectivity are combined, there are more other possible IAB networking scenarios. For example, a donor node and an IAB node connected to another donor node form dual connectivity to serve a terminal device. The possible IAB networking scenarios are not listed one by one herein.

To make embodiments of this application more clearly, the following collectively describes some content and concepts related to embodiments of this application.

1. Link, previous-hop node of a node, next-hop node of a node, ingress link (ingress link) of a node, and egress link (egress link) of a node

Link: It is a path between two neighboring nodes on a path.

Previous-hop node of a node: It is a last node that is on a path including the node and that receives a data packet before the node.

Next-hop node of a node: It is a first node that is on a path including the node and that receives a data packet after the node.

Ingress link of a node: It is a link between the node and a previous-hop node of the node, and may also be referred to as a previous-hop link of the node.

Egress link of a node: It is a link between the node and a next-hop node of the node, and may also be referred to as a next-hop link of the node.

2. Access IAB node and intermediate IAB node

In embodiments of this application, the access IAB node is an IAB node accessed by a terminal device, and the intermediate IAB node is an IAB node that provides a wireless backhaul service for another IAB node (for example, an access IAB node or another intermediate IAB node).

For example, refer to FIG. 3. In the path "the terminal device 1→the IAB node 4→the IAB node 3→the IAB node 1→the donor node", the IAB node 4 is an access IAB node, and the IAB node 3 and the IAB node 1 are intermediate IAB nodes. The IAB node 3 provides a backhaul service for the IAB node 4, and the IAB node 1 provides a backhaul service for the IAB node 3.

It should be noted that an IAB-node is an access IAB-node for a terminal device that accesses the IAB-node, and is an intermediate IAB node for a terminal device that accesses another IAB node. Therefore, whether an IAB node is specifically an access IAB node or an intermediate IAB node is not fixed and needs to be determined based on a specific application scenario.

3. Components of an IAB node

The IAB node may play a role of a mobile terminal device (mobile terminal, MT) and a role of a DU. When the IAB node is oriented to a parent node of the IAB node, the IAB node may be considered as a terminal device. In this case, the IAB node plays the role of the MT. When the IAB node is oriented to a child node of the IAB node (the child node may be a terminal device or a terminal device part of another IAB node), the IAB node may be considered as a communication apparatus. In this case, the IAB node plays the role of the DU. Therefore, it may be considered that the IAB node includes an MT part and a DU part. An IAB node may establish a backhaul connection to at least one parent node of the IAB node through an MT part. A DU part of an IAB node may provide an access service for a terminal device or an MT part of another IAB node.

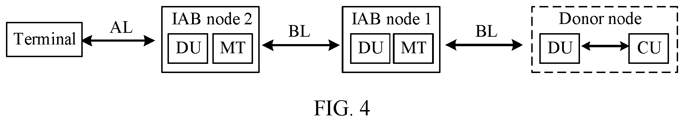

For example, refer to FIG. 4. A terminal device is connected to a donor node through an IAB node 2 and an IAB node 1. Each of the IAB node 1 and the IAB node 2 includes a DU part and an MT part. The DU part of the IAB node 2 provides an access service for the terminal device. The DU part of the IAB node 1 provides an access service for the MT part of the IAB node 2. A donor-DU provides an access service for the MT part of the IAB node 1.

4. F1 interface and protocol layer of the F1 interface

The F1 interface is a logical interface between a DU part of an IAB node and a donor node (or a donor-CU or donor-DU). The F1 interface may also be referred to as an F1* interface that supports a user plane and a control plane. The protocol layer of the F1 interface is a communication protocol layer on the F1 interface.

For example, a user plane protocol layer of the F1 interface may include one or more of an IP layer, a UDP layer, and a GTP-U layer. Optionally, the user plane protocol layer of the F1 interface further includes a PDCP layer and/or an IP security (IP Security, IPsec) layer.

For example, a control plane protocol layer of the F1 interface may include one or more of an IP layer, an F1AP layer, and an SCTP layer. Optionally, the control plane protocol layer of the F1 interface further includes one or more of a PDCP layer, an IPsec layer, and a datagram transport layer security (datagram transport layer security, DTLS) layer.

The following describes the technical solutions of this application in detail with reference to the accompanying drawings.

For ease of understanding embodiments of this application, related terms are first briefly described.

1. Beam (beam): A beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent by using different beams. Optionally, a plurality of beams having a same communication feature or similar communication features may be considered as one beam. One beam may include one or more antenna ports, configured to transmit a data channel, a control channel, a sounding signal, and the like. For example, a transmit beam may be distribution of signal strength formed in different directions in space after a signal is transmitted through an antenna, and a receive beam may be distribution of signal strength, in different directions in space, of a wireless signal received from an antenna. It may be understood that one or more antenna ports forming one beam may also be considered as one antenna port set. In a protocol, a beam may also be embodied as a spatial filter (spatial filter).

2. RTT: It is a time period in which a signal sent by a transmitting end is propagated to a receiving end plus a time period in which the receiving end sends a signal to the transmitting end.

In NR, for RTT-based positioning, measurement may be performed by using a plurality of reference signals of a plurality of communication apparatuses or one communication apparatus. In NR, one communication apparatus may include a plurality of transmission points (transmission points, TPs), and may send positioning reference signals to a same terminal device by using a plurality of transmission points; or a plurality of communication apparatuses, for example, one serving base station and a plurality of neighboring base stations, measure a reference signal sent by a terminal device, to obtain RTT measurement. Because transmission and reception of reference signals of a plurality of TPs cause an association problem in RTT calculation, between a pair of reference signals whose time difference is to be calculated during the RTT calculation needs to be specified. Otherwise, a calculation error is caused, and a measurement error is caused.

Specifically, when the terminal device receives a plurality of downlink positioning reference signals, to perform RTT measurement, the terminal device also needs to send a positioning reference signal in an uplink direction, so that the communication apparatus measures the uplink positioning reference signal sent by the terminal device. The uplink positioning reference signal sent by the terminal device may be received by a plurality of communication apparatuses. If the terminal device does not specifies a correspondence between a downlink positioning reference signal and an uplink positioning reference signal in a measurement report, the communication apparatus does not know a downlink positioning reference signal and an uplink positioning reference signal for which a time difference measured by the terminal device is obtained, causing confusion in RTT calculation.

3. Global navigation satellite system (GNSS): It includes navigation satellite systems provided by countries and regions, for example, the BeiDou of China, the GPS of the United States, the Galileo system of Europe, and the GLONASS (GLONASS) of Russia.

The GPS satellite system includes 24 MEO satellites with an orbital height of 20200 km. The BeiDou system of China includes 24 MEO (medium earth orbit) satellites, three GEO (geostationary earth orbit) satellites, and three GEO satellites each having an inclined orbit. The Galileo system of European Union includes 24 MEO satellites operating at an orbital height of 19100 km. The GLONASS of Russia includes 24 MEO satellites operating at an orbital height of 19100 km. A GNSS satellite usually periodically and continuously broadcasts a signal, and the signal mainly includes information such as a satellite number, a timestamp, and ephemeris data. A terminal device on the ground obtains a location of the terminal device by using the received GNSS information.

It should be understood that descriptions of specific scenarios in embodiments of this application are merely examples. In addition to the foregoing described application scenarios, the method provided in embodiments of this application is also applicable to an application scenario in which a similar problem exists.

It should be understood that when ordinal numbers such as "first", "second", "third", "fourth", and "fifth" are mentioned in the present invention, unless the ordinal numbers definitely indicate an order based on the context, it should be understood that the ordinal numbers are merely used for differentiation.

This application provides a plurality of positioning methods. By way of example, and not limitation, a terminal device may be positioned by combining a main satellite and an auxiliary satellite. The positioning method provided in this application is a method for positioning a terminal device by combining two satellites, and by sending and receiving a reference signal between the two satellites and the terminal device.

In embodiments of this application, a satellite 1 is a satellite that currently serves a terminal device, and may also be referred to as a main satellite. The main satellite selects an auxiliary satellite, namely, a satellite 2, from satellites that can currently cover the terminal device.

For example, the satellite 1 selects a satellite closest to the satellite 1 as the auxiliary satellite, or selects a satellite closest to a cell or a beam position of a UE as the auxiliary satellite. After the auxiliary satellite 2 is determined, the satellite 1 may transfer location information of the satellite 2, including an ephemeris and orbit information, to the UE.

Specifically, in embodiments of this application, each of the satellite 1 and the satellite 2 may be any one of a LEO (low orbit) satellite, an MEO satellite, or a GEO satellite.

For example, both the satellite 1 and the satellite 2 may be LEO satellites or MEO satellites.

Alternatively, the satellite 1 is a LEO satellite, and the satellite 2 is an MEO satellite.

Alternatively, the satellite 1 is an MEO satellite, and the satellite 2 is a LEO satellite.

Alternatively, the satellite 1 is a donor node, and the satellite 2 is any IAB node.

Alternatively, the satellite 1 is any IAB node, and the satellite 1 is a donor node.

In a possible implementation, the satellite 1 may alternatively be a GNSS satellite.

In embodiments of this application, the terminal device positioning method in this application is specifically described in two cases.

Specifically, in a case 1, the satellite 1 may be any satellite other than a GNSS satellite, and the satellite 2 may be any satellite. In a case 2, the satellite 1 is a GNSS satellite, and the satellite 2 may be any satellite.

The following describes the technical solutions of this application with reference to the accompanying drawings.

Case 1

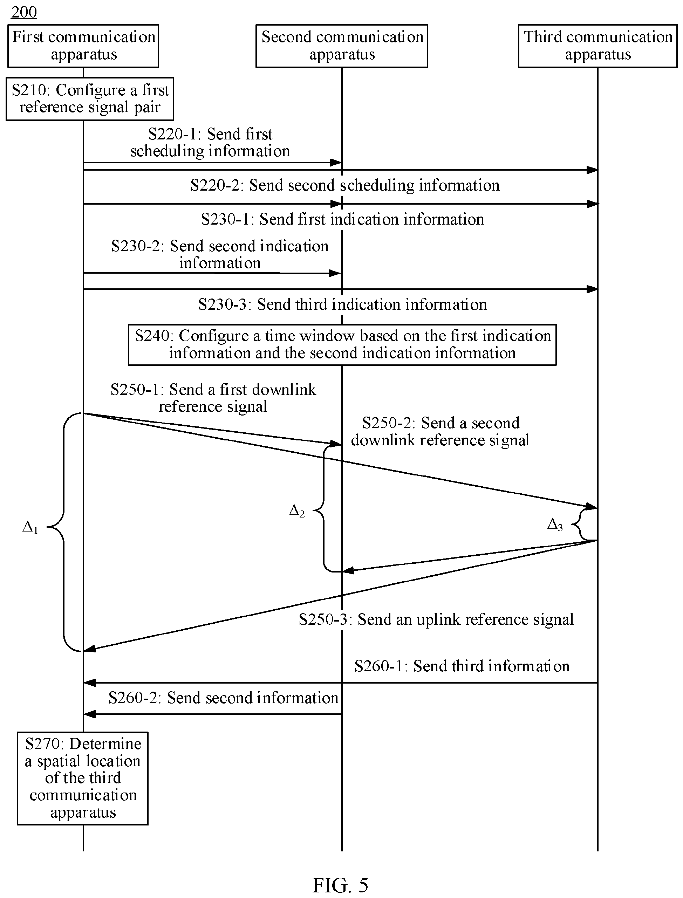

FIG. 5 is a schematic interaction diagram 200 of a positioning method according to an embodiment of this application. The method in FIG. 5 includes at least a part of the following content.

S210: A satellite 1 (that is, an example of a first communication apparatus) configures a first reference signal group, where the first reference signal group includes one first downlink reference signal, one second downlink reference signal, and one uplink reference signal that have an association relationship, the first downlink reference signal is a reference signal sent by the satellite 1 to a satellite 2, the second downlink reference signal is a reference signal sent by the satellite 1 to a UE, and the uplink reference signal is a reference signal sent by the UE to the satellite 1 and the satellite 2.

S220: The satellite 1 sends first scheduling information to the satellite 2 (that is, an example of a second communication apparatus), and sends second scheduling information to the UE (that is, an example of a third communication apparatus), where the first scheduling information indicates the satellite 2 to obtain and send second information, and the second scheduling information indicates the UE to obtain and send third information.

The second information indicates a difference between time points at which the satellite 2 receives the downlink reference signal and the uplink reference signal, and spatial locations at which the satellite 2 receives the downlink reference signal and the uplink reference signal. The third information indicates a difference between time points at which the UE receives the downlink reference signal and sends the uplink reference signal.

S230: The satellite 1 sends first indication information and second indication information to the satellite 2, and sends the first indication information and third indication information to the UE, where the first indication information indicates a configuration of the first reference signal group; the second indication information indicates an ephemeris of the satellite 1 and geographical location-related information of the UE, where the ephemeris of the satellite 1 includes information about an operating orbit of the satellite 1; and the third indication information indicates location information of the satellite 2, where the location information of the satellite 2 includes an ephemeris and orbit information of the satellite 2.

S240: The satellite 2 configures a time window based on the first indication information and the second indication information.

S250: The satellite 1 sends the first downlink reference signal to the satellite 2 and sends the second downlink reference signal to the UE simultaneously, and records a spatial location "$S_1$" at which the satellite 1 sends the two downlink reference signals.

After receiving the second downlink reference signal, the UE simultaneously sends the uplink reference signal to the satellite 1 and the satellite 2, and records the difference, namely, a third time difference "$\Delta_3$", between the time point at which the UE receives the second downlink reference signal and the time point at which the UE sends the uplink reference signal.

The satellite 2 receives the first downlink reference signal and the uplink reference signal, and records the difference, namely, a second time difference "$\Delta_2$", between the time point at which the satellite 2 receives the first downlink reference signal and the time point at which the satellite 2 receives the uplink reference signal. The satellite 2 records a spatial location "$L_1$" of the satellite 2 when the satellite 2 receives the first downlink reference signal and a spatial location "$L_2$" of the satellite 2 when the satellite 2 receives the uplink reference signal.

The satellite 1 receives the uplink reference signal, and records a spatial location "$S_2$" of the satellite 1 when the satellite 1 receives the uplink reference signal. The satellite 1 records a difference, namely, a first time difference "$\Delta_1$", between a time point at which the satellite 1 receives the uplink reference signal and a time point at which the satellite 1 sends the first downlink reference signal and the second downlink reference signal.

S260: The satellite 2 sends the second information to the satellite 1, and the UE sends the third information to the satellite 1.

S270: The satellite 1 determines a spatial location of the UE based on first information, the second information, and the third information, where the first information indicates the difference between the time point at which the satellite 1 sends the downlink reference signals and the time point at which the satellite 1 receives the uplink reference signal, and spatial locations at which the satellite 1 sends the downlink reference signals and receives the uplink reference signal.

In the foregoing technical solution, a main satellite configures an existing reference signal for a terminal device as a measurement signal for location verification, and sends related location information, such as an identifier ID of a cell in which the terminal device is located, to an auxiliary satellite. The terminal device is positioned by combining the main satellite and the auxiliary satellite. The auxiliary satellite configures, in advance based on related location information such as configuration information of a related reference signal, the identifier ID of the cell in which the terminal device is located, and an ephemeris of the auxiliary satellite, a time window for receiving a corresponding reference signal, so as to receive a downlink reference signal sent by the main satellite and an uplink reference signal sent by the terminal device. The main satellite records a difference between time points at which the main satellite sends and receives corresponding reference signals, the terminal device records a difference between time points at which the terminal device receives the reference signal and sends the signal and reports the time difference to the main satellite, and the auxiliary satellite records a difference between time points at which the auxiliary satellite receives corresponding reference signals and reports the time difference to the main satellite. According to the foregoing technical solution, a dual-star-based terminal device positioning method is provided. Positioning or location verification is performed by using an existing reference signal sending and receiving time difference, and no additional reference signal needs to be configured. In comparison with single-satellite positioning, fewer measurement times are required, and a positioning delay is smaller. In comparison with multi-satellite positioning, strict synchronization between satellites and between the satellite and a terminal device is not required, and a configuration is simpler and flexibility is higher.

The following describes S210 to S270 in detail.

In S210, the satellite 1 configures the first reference signal group, where each reference signal pair includes one first downlink reference signal, one second downlink reference signal, and an uplink reference signal that have an association relationship, the first downlink reference signal is a reference signal sent by the satellite 1 to the satellite 2, the second downlink reference signal is a reference signal sent by the satellite 1 to the UE, and the uplink reference signal is a reference signal sent by the UE to the satellite 1 and the satellite 2.

In a possible implementation, the satellite 1 configures the first reference signal group, in other words, the satellite 1 configures the first downlink reference signal, the second downlink reference signal, and the uplink reference signal.

It is uniformly described herein that reference signals (including an uplink reference signal and a downlink reference signal) in embodiments of this application are reference signal for positioning a UE. It should be understood that, in embodiments of this application, the "reference signal for positioning a UE" is uniformly denoted as a "reference signal". However, it cannot be understood as that the "reference signal" includes only a reference signal dedicated for positioning (positioning reference signal, PRS). Details are not described below again. Optionally, the reference signal for positioning the UE includes but is not limited to a positioning reference signal PRS, a demodulation reference signal (demodulation reference signal, DMRS), a tracking reference signal (tracking reference signal, TRS), and a channel state information reference signal (channel state information reference signal, CSI-RS).

In a possible implementation, the satellite 1 sends the downlink reference signals to both the satellite 2 and the UE, and the first downlink reference signal sent by the satellite 1 to the satellite 2 and the second downlink reference signal sent by the satellite 1 to the UE may be the same or different.

For example, the satellite 1 configures the first downlink reference signal sent by the satellite 1 to the satellite 2 as a PRS reference signal, and the second downlink reference signal sent by the satellite 1 to the UE as a CSI-RS reference signal.

For another example, the two downlink reference signals sent by the satellite 1 to the satellite 2 and the UE are both PRS reference signals.

In a possible implementation, the downlink reference signal that is sent by the satellite 1 to the satellite 2 and that is configured by the satellite 1 may be a signal in any form, for example, a laser signal.

In S220, the satellite 1 sends the first scheduling information to the satellite 2, and sends the second scheduling information to the UE, where the first scheduling information indicates the satellite 2 to obtain and send the second information, and the second scheduling information indicates the UE to obtain and send the third information.

The second information indicates the difference between the time points at which the satellite 2 receives the first downlink reference signal and the uplink reference signal, and the spatial locations at which the satellite 2 receives the first downlink reference signal and the uplink reference signal. The third information indicates the difference between the time points at which the UE receives the second downlink reference signal and sends the uplink reference signal.

By way of example, and not limitation, in this application, the first scheduling information and the second scheduling information may be carried in any common type of message, for example, RRC signaling, a MAC CE, UCI, or a SIB.

In S230, the satellite 1 sends the first indication information and the second indication information to the satellite 2, and sends the first indication information and the third indication information to the UE, where the first indication information indicates the configuration of the first reference signal group; the second indication information indicates the ephemeris of the satellite 1 and the geographical location-related information of the UE, where the ephemeris of the satellite 1 includes the information about the operating orbit of the satellite 1; and the third indication information indicates the location information of the satellite 2, where the location information of the satellite 2 includes the ephemeris and the orbit information of the satellite 2.

Specifically, in this embodiment, the first indication information indicates configurations of the first downlink reference signal, the second downlink reference signal, and the uplink reference signal.

By way of example, and not limitation, in this application, the first indication information and the second indication information may be carried in any common type of message, for example, RRC signaling, a MAC CE, UCI, or a SIB.

Optionally, the first indication information may further include configuration information of the downlink reference signal, configuration information of the uplink reference signal, a reporting configuration, and the like.

The configuration information of the downlink reference signal may indicate a configuration of the downlink reference signal that needs to be measured when the UE performs RTT measurement. Optionally, the configuration information of the downlink reference signal includes one or more of the following information: a frequency, a sending time-frequency resource, a periodicity, beam information, power information, sequence information, timing information, and the like of the downlink reference signal.

The configuration information of the uplink reference signal includes one or more of the following information: a sending frequency, a time-frequency resource, a periodicity, beam information, power information, sequence information, timing information, and the like of the uplink reference signal. The beam information, the power information, and the timing information of the uplink reference signal may be indicated in an association manner by using the downlink reference signal that has the association relationship with the uplink reference signal.

The reporting configuration is configurations such as a reporting mode (for example, a single-station reporting mode or a multi-station reporting mode) and a reporting manner (for example, whether differential reporting is used) of the UE.

Optionally, the configuration information sent by the satellite 1 to the UE may further include one or more of the following information: measurement gap duration, whether quasi-colocation (Quasi-Colocation, QCL) reference signal joint measurement is allowed and joint measurement resource-related information, whether panel RTT reporting is required and information about a maximum quantity of panels that can be reported, whether multi-path (multi-path) RTT reporting is required and a maximum quantity of multi-paths that can be reported, a quantity of uplink and/or downlink cells that need or are allowed to be reported, a reporting mode (a multi-station reporting mode or a single-station reporting mode), whether differential RTT reporting is used, whether blind detection synchronization signal block (Synchronization Signal Block, SSB) reporting is allowed and a related condition, and the like.

Optionally, the UE may perform RTT measurement by using a random access mechanism or another similar mechanism. The satellite 1 configures a series of downlink reference signal resources for the UE, and each downlink reference signal resource is associated with a corresponding uplink reference signal resource. The UE selects a corresponding uplink reference signal resource for sending based on a measurement result (for example, signal strength, a reference signal received power (reference signal received power, RSRP), reference signal received quality (reference signal received quality, RSRQ), and a signal to interference plus noise ratio (signal to interference and noise ratio, SINR)) of a downlink reference signal resource, and subsequently reports the selected downlink reference signal resource and the corresponding uplink reference signal resource to the satellite 1.

In S240, the satellite 2 configures the time window based on the first indication information and the second indication information.

Specifically, in this embodiment, the satellite 2 obtains the configurations of the first downlink reference signal, the second downlink reference signal, and the uplink reference signal based on the first indication information; and learns of the ephemeris of the satellite 1 and the geographical location-related information of the UE based on the second indication information, where the ephemeris of the satellite 1 includes the information about the operating orbit of the satellite 1.

In a possible implementation, the satellite 2 configures a time window #1 based on configurations of the first downlink reference signal and the uplink reference signal, the ephemeris of the satellite 1, the ephemeris of the satellite 2, and the geographical location-related information of the UE. The time window #1 is used for receiving the first downlink reference signal and the uplink reference signal.

It should be understood that the satellite 2 receives the first downlink reference signal and the uplink reference signal in the time window #1, and measures, in the time window #1, the difference between the time points at which the satellite 2 receives the first downlink reference signal and the uplink reference signal.

In S250, the satellite 1 sends the first downlink reference signal to the satellite 2 and sends the second downlink reference signal to the UE simultaneously, and records the spatial location $S_1$ at which the satellite 1 sends the two downlink reference signals. After receiving the second downlink reference signal, the UE simultaneously sends the uplink reference signal to the satellite 1 and the satellite 2, and records the difference, namely, the third time difference $\Delta_3$, between the time point at which the UE receives the second downlink reference signal and the time point at which the UE sends the uplink reference signal. The satellite 2 receives the first downlink reference signal and the uplink reference signal, and records the difference, namely, the second time difference $\Delta_2$, between the time point at which the satellite 2 receives the first downlink reference signal and the time point at which the satellite 2 receives the uplink reference signal. The satellite 2 records the spatial location $L_1$ of the satellite 2 when the satellite 2 receives the first downlink reference signal and the spatial location $L_2$ of the satellite 2 when the satellite 2 receives the uplink reference signal. The satellite 1 receives the uplink reference signal, and records the spatial location $S_2$ of the satellite 1 when the satellite 1 receives the uplink reference signal. The satellite 1 records the difference, namely, the first time difference $\Delta_1$, between the time point at which the satellite 1 receives the uplink reference signal and the time point at which the satellite 1 sends the first downlink reference signal and the second downlink reference signal.

As shown in FIG. 5, the following steps (1) to (4) are a measurement process, and the process corresponds to the first reference signal group. A procedure is as follows:

The satellite 1 sends the first downlink reference signal to the satellite 2 and sends the second downlink reference signal to the UE simultaneously, and records the spatial location $S_1$ at which the satellite 1 sends the two downlink reference signals.

After receiving the second downlink reference signal, the UE simultaneously sends the uplink reference signal to the satellite 1 and the satellite 2, and records the difference $\Delta_3$ between the time point at which the UE receives the second downlink reference signal and the time point at which the UE sends the uplink reference signal.

The satellite 2 receives the first downlink reference signal and the uplink reference signal, and records the difference $\Delta_2$ between the time point at which the satellite 2 receives the first downlink reference signal and the time point at which the satellite 2 receives the uplink reference signal. The satellite 2 records the spatial location $L_1$ when the satellite 2 receives the first downlink reference signal and the spatial location $L_2$ when the satellite 2 receives the uplink reference signal.

The satellite 1 receives the uplink reference signal, and records the spatial location $S_2$ when the satellite 1 receives the uplink reference signal. The satellite 1 records the difference $\Delta_1$ between the time point at which the satellite 1 receives the uplink reference signal and the time point at which the satellite 1 sends the first downlink reference signal.

In S260, the satellite 2 sends the second information to the satellite 1, and the UE sends the third information to the satellite 1.

Specifically, in this embodiment, the second information corresponds to the first reference signal group, and includes the difference $\Delta_2$ between the time point at which the satellite 2 receives the first downlink reference signal and the time point at which the satellite 2 receives the uplink reference signal. The satellite 2 records the spatial location $L_1$ when the satellite 2 receives the first downlink reference signal and the spatial location $L_2$ when the satellite 2 receives the uplink reference signal.

Similarly, in this embodiment, the third information also corresponds to the first reference signal group, and includes the difference $\Delta_3$ between the time point at which the UE receives the first downlink reference signal and the time point at which the UE sends the uplink reference signal.

In S270, the satellite 1 determines the spatial location of the UE based on the first information, the second information, and the third information, where the first information indicates the difference between the time point at which the satellite 1 sends the downlink reference signals and the time point at which the satellite 1 receives the uplink reference signal, and the spatial locations at which the satellite 1 sends the downlink reference signals and receives the uplink reference signal.

The first information corresponds to the first reference signal group, and includes the difference $\Delta_1$ between the time point at which the satellite 1 sends the first downlink reference signal and the second downlink reference signal and the time point at which the satellite 1 receives the uplink reference signal, the spatial location $S_1$ at which the satellite 1 sends the first downlink reference signal and the second downlink reference signal, and the spatial location $S_2$ at which the satellite 1 receives the uplink reference signal.

It is assumed that the spatial location of the UE is "u=[x, y, z]". Based on the time differences $\Delta_1$, $\Delta_2$, and $\Delta_3$ measured by the satellite 1, the satellite 2, and the UE; and the locations $S_1$, $S_2$, $L_1$, and $L_2$ when the satellite 1 and the satellite 2 send and receive signals. The following two equations may be obtained based on the foregoing steps (1) to (4):

$$\Delta_1 - \Delta_3 = \frac{\left\|S_2 - u\right\|}{c} + \frac{\left\|u - S_1\right\|}{c} \qquad (1)$$

$$\Delta_2 - \Delta_3 = \frac{\left\|L_2 - u\right\|}{c} + \frac{\left\|u - S_1\right\|}{c} - \frac{\left\|L_1 - S_1\right\|}{c} \qquad (2)$$

"c" is a speed of light, and the foregoing equation is a three-variable equation. Therefore, the foregoing measurement needs to be performed at least once again, in other words, steps (1) to (4) need to be performed again, and a group of parameters measured again are substituted into (1) and (2), so that the spatial location "u=[x, y, z]" of the UE can be obtained.

Therefore, in a possible implementation, the foregoing process of S210 to S260 needs to be performed at least twice, to obtain at least two groups of first information, second information, and third information, and parameters of the at least two groups of first information, second information, and third information are respectively substituted into the foregoing equations (1) and (2), so that the UE can be positioned.

In another possible implementation, more than two groups of first reference signal groups may be configured once in S210. For example, the satellite 1 configures the first reference signal group and a second reference signal group.

In this case, in S220, the first scheduling information indicates the satellite 2 to obtain and send two pieces of second information, where the two pieces of second information respectively correspond to the first reference signal group and the second reference signal group. Similarly, the second scheduling information indicates the UE to obtain and send two pieces of third information, where the two pieces of third information respectively correspond to the first reference signal group and the second reference signal group.

Similarly, in S230, the first indication information indicates configurations of the first reference signal group and the second reference signal group; and in S240, the satellite 2 configures a time window for receiving the first reference signal group and the second reference signal group.

In this case, two groups of first information, second information, and third information may be obtained in S250, and the two groups of information respectively correspond to the first reference signal group and the second reference signal group, so that the satellite 1 may respectively substitute parameters in the two groups of first information, second information, and third information to the foregoing equations (1) and (2), to position the UE.

Optionally, the method 200 further includes:

The satellite 1 determines a communication apparatus participating in positioning, namely, the satellite 2. The satellite 1 sends scheduling information to the UE, where the scheduling information is used to obtain measurement information required for positioning the UE. Correspondingly, the UE receives the scheduling information from the satellite 1 and sends pre-positioning information to the satellite 1.

Optionally, the pre-positioning information includes one or more of the following information: identification information of the UE, positioning capability information of the UE, spatial information of the UE, positioning manner information, positioning reporting information, positioning configuration information, delay information of the UE, angle information of the UE, and power information of the UE. It should be understood that a part of the scheduling information may not be necessarily sent, and may be sent in a signaling manner similar to assistant data (assistant data). This is not specifically limited herein.

The spatial information of the UE may include one or more of the following information: a current serving cell of the UE, a serving beam, a previous measurement result that is of the UE (a beam measurement result, a cell measurement result, a timing advance (timing advance, TA), and the like) and that is provided by the serving cell, approximate geographical location information of the UE, and a result of previous measurement performed by the UE.

The positioning reporting information includes at least one of a reporting periodicity (a time period or a quantity of times of continuous reporting) and reporting triggered by an event (where the event includes a change of a serving beam, a change of a cell, a change of a connection status of the UE (for example, from a connected state to an inactive state or an idle state), and the like).

The positioning configuration information includes at least one of a type (for example, PRS, CIS-RS, or TRS), a sending bandwidth, times, a time-frequency resource, a sequence, and the like of a downlink reference signal (which may be a downlink positioning reference signal recommended to be configured by a positioning function node); and a type (SRS, uplink PRS, phase-tracking reference signal (phase noise tracking RS, PTRS), and the like), a sending bandwidth, times, a time-frequency resource, and a sequence of an uplink reference signal (which may be an uplink positioning reference signal recommended to be configured by the positioning function node).

The delay information of the UE may include an expected delay value. The expected delay value refers to a possible arrival time window that is of the UE and that is detected by the satellite 1, where the arrival time window may use network time as a reference system or may be a delay relative to a boundary of a time unit determined by using a reference signal (for example, a reference signal (for example, an SSB) of a cell).

The angle information of the UE may be used to assist the communication apparatus in configuring a related downlink positioning reference signal and a receive beam for the UE. The angle information of the UE may include an expected angle value. The expected angle value refers to a receiving direction of the UE that is expected by the communication apparatus or an expected downlink sending direction of the communication apparatus. The expected angle value may be an angle value in a spatial coordinate system, or may be a reference signal (for example, a reference signal (for example, an SSB) of the cell). This indicates that a relative location or a transmit beam of the UE roughly faces a direction of a transmit beam of a positioning reference signal. The expected angle value may be determined by pre-measuring and/or roughly positioning the UE.

The power information of the UE may include an expected power value, which may be an absolute power in a unit of decibel-milliwatt (dBm), watt, or the like, or may be an expected power value of a positioning reference signal (for example, a positioning reference signal of a serving cell). This indicates that transmit power of the UE is calculated by using the positioning reference signal (for example, a path loss). The communication apparatus may further send cell information to the positioning function node (where a cell may be a cell measured by the communication apparatus, or may be cell information that corresponds to a measurement result of a cell and that is reported by the UE).

By way of example, and not limitation, in an embodiment shown in the following case 2, the satellite 1 is a GNSS satellite.

Case 2

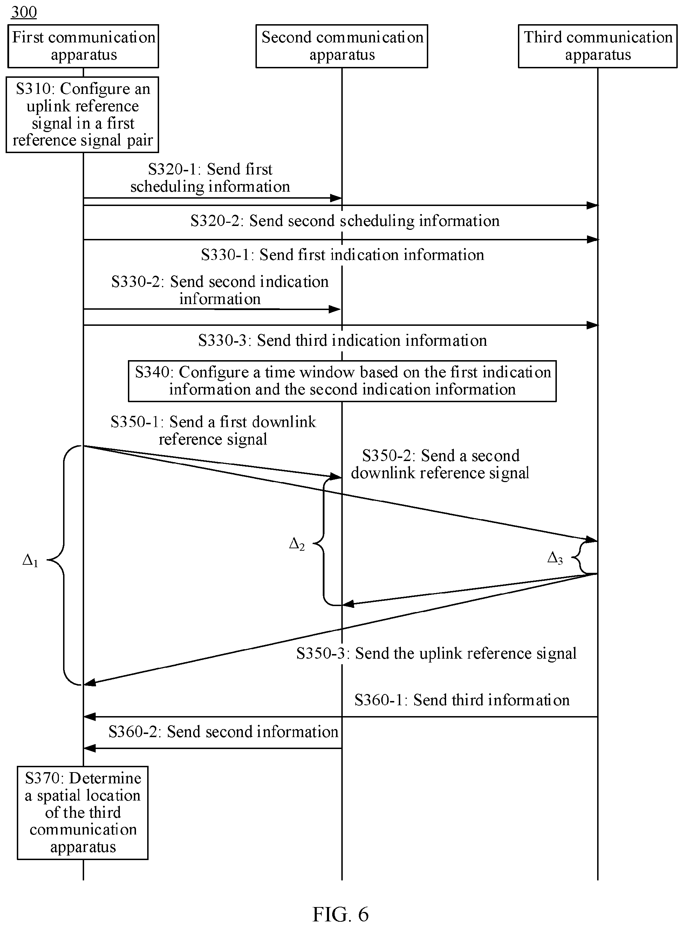

FIG. 6 is a schematic interaction diagram 300 of a positioning method according to an embodiment of this application. The method is applicable to a case in which a main satellite is a GNSS satellite. The method in FIG. 6 includes at least a part of the following content.

S310: A satellite 1 (that is, a main satellite, an example of a first communication apparatus) configures an uplink reference signal in a first reference signal group, where the uplink reference signal is a reference signal sent by a UE to the satellite 1 and a satellite 2 (that is, an auxiliary satellite, an example of a second communication apparatus).

S320: The satellite 1 sends first scheduling information to the satellite 2, and sends second scheduling information to the UE (that is, an example of a third communication apparatus), where the first scheduling information indicates the satellite 2 to obtain and send second information, and the second scheduling information indicates the UE to obtain and send third information.

The second information indicates a difference between time points at which the satellite 2 receives a downlink reference signal and the uplink reference signal, and spatial locations at which the satellite 2 receives the downlink reference signal and receives the uplink reference signal. The third information indicates a difference between time points at which the UE receives the downlink reference signal and sends the uplink reference signal.

S330: The satellite 1 sends first indication information and second indication information to the satellite 2, and sends the first indication information to the UE, where the first indication information indicates a configuration of the first reference signal group, and the second indication information indicates geographical location-related information of the UE.

S330: The satellite 1 sends first indication information and second indication information to the satellite 2, and sends the first indication information and third indication information to the UE, where the first indication information indicates a configuration of the first reference signal group, the second indication information indicates geographical location-related information of the UE, and the third indication information indicates location information of the satellite 2, where the location information of the satellite 2 includes an ephemeris and orbit information of the satellite 2.

S340: The satellite 2 configures a time window based on the first indication information and the second indication information.

S350: The satellite 1 sends a first downlink reference signal to the satellite 2 and sends a second downlink reference signal to the UE simultaneously, and records a spatial location $S_1$ at which the satellite 1 sends the two downlink reference signals.

After receiving the second downlink reference signal, the UE simultaneously sends the uplink reference signal to the satellite 1 and the satellite 2, and records the difference, namely, a third time difference $\Delta_3$, between the time point at which the UE receives the second downlink reference signal and the time point at which the UE sends the uplink reference signal.

The satellite 2 receives the first downlink reference signal and the uplink reference signal, and records the difference, namely, a second time difference $\Delta_2$, between the time point at which the satellite 2 receives the first downlink reference signal and the time point at which the satellite 2 receives the uplink reference signal. The satellite 2 records a spatial location $L_1$ of the satellite 2 when the satellite 2 receives the first downlink reference signal and the spatial location $L_2$ the satellite 2 when the satellite 2 receives the uplink reference signal.

The satellite 1 receives the uplink reference signal, and records a spatial location $S_2$ of the satellite 1 when the satellite 1 receives the uplink reference signal. The satellite 1 records a difference, namely, a first time difference $\Delta_1$, between a time point at which the satellite 1 receives the uplink reference signal and a time point at which the satellite 1 sends the first downlink reference signal and the second downlink reference signal.

S360: The satellite 2 sends the second information to the satellite 1, and the UE sends the third information to the satellite 1.

S370: The satellite 1 determines a spatial location of the UE based on first information, the second information, and the third information, where the first information indicates the difference between the time point at which the satellite 1 sends the downlink reference signals and the time point at which the satellite 1 receives the uplink reference signal, and spatial locations at which the satellite 1 sends the downlink reference signals and receives the uplink reference signal.

In the foregoing technical solution, a GNSS satellite is used as a main satellite, and configures an existing uplink reference signal for a terminal device as a measurement signal for location verification. A GNSS signal is combined with the uplink reference signal. The main satellite indicates an auxiliary satellite and the terminal device to measure a time difference between the GNSS signal and the uplink reference signal, and sends related location information, such as an identifier ID of a cell in which the terminal device is located, to an auxiliary satellite. The terminal device is positioned by combining the main satellite and the auxiliary satellite. The auxiliary satellite configures, in advance based on related location information such as configuration information of a related reference signal, the identifier ID of the cell in which the terminal device is located, and an ephemeris of the auxiliary satellite, a time window for receiving a corresponding reference signal, so as to receive a downlink reference signal sent by the main satellite and an uplink reference signal sent by the terminal device. The main satellite records a difference between time points at which the main satellite sends and receives corresponding reference signals, the terminal device records a difference between time points at which the terminal device receives the reference signal and sends the signal and reports the time difference to the main satellite, and the auxiliary satellite records a difference between time points at which the auxiliary satellite receives corresponding reference signals and reports the time difference to the main satellite. According to the foregoing technical solution, a dual-star-based terminal device positioning method is provided. Positioning or location verification is performed by using an existing reference signal sending and receiving time difference, and no additional reference signal needs to be configured. In comparison with single-satellite positioning, fewer measurement times are required, and a positioning delay is smaller. In comparison with multi-satellite positioning, strict synchronization between satellites and between the satellite and a terminal device is not required, and a configuration is simpler and flexibility is higher. In addition, a main satellite does not need to specially configure a downlink reference signal, and does not need to send related configuration information to an auxiliary satellite, so that signaling overheads are reduced, and time-frequency resource occupation is reduced.

The following describes S310 to S370 in detail.

In S310, the satellite 1 (namely, the main satellite) configures the uplink reference signal in the first reference signal group, where each reference signal pair includes a first downlink reference signal, a second downlink reference signal, and an uplink reference signal that have an association relationship, the first downlink reference signal is a reference signal sent by the satellite 1 to the satellite 2, the second downlink reference signal is a reference signal sent by the satellite 1 to the UE, and the uplink reference signal is a reference signal sent by the UE to the satellite 1 and the satellite 2.

In this embodiment, the satellite 1 is a GNSS satellite, and the GNSS satellite keeps sending GNSS information.

A GNSS satellite usually periodically and continuously broadcasts a signal, and the signal mainly includes information such as a satellite number, a timestamp, and ephemeris data.

In this case, the satellite 1 may not configure a downlink reference signal, but only needs to configure an uplink reference signal.

In this implementation, the satellite 1 keeps sending configuration information of the downlink reference signal to the satellite 2. Therefore, the satellite 1 may not separately send the configuration information of the downlink reference signal to the satellite 2, so that signaling overheads are reduced, and time-frequency resource occupation is reduced.

In comparison with a case in which a UE on the ground is covered by two LEO satellites simultaneously, a UE on the ground is generally more likely to observe an MEO or GNSS satellite and a LEO satellite simultaneously.

In a possible implementation, the satellite 1 is a GNSS satellite, and the satellite 2 is a LEO satellite.

For another specific implementation, refer to the corresponding process in the embodiment 1. Details are not described herein again.

In S320, the satellite 1 sends the first scheduling information to the satellite 2, and sends the second scheduling information to the UE, where the first scheduling information indicates the satellite 2 to obtain and send the second information, and the second scheduling information indicates the UE to obtain and send the third information.

The second information indicates the difference between the time points at which the satellite 2 receives the downlink reference signal and the uplink reference signal, and the spatial locations at which the satellite 2 receives the downlink reference signal and the uplink reference signal. The third information indicates the difference between the time points at which the UE receives the downlink reference signal and sends the uplink reference signal.

In a possible implementation, the satellite 1 may explicitly indicate the satellite 2 to measure a time point of several frames (frames), sub-frames (sub-frames), or words (words) in the GNSS downlink reference signal, measure the receiving time point of the uplink reference signal, and report a time difference between the measured time point and the receiving time point of the uplink reference signal.

For example, the satellite 2 measures a time difference between time points at which the satellite 2 receives a frame in the GNSS downlink reference signal and receives the uplink reference signal sent by the UE, and reports the time difference to the GNSS satellite.

In a possible implementation, the satellite 1 may explicitly indicate the UE to measure a time point of several frames, sub-frames, or words in a GNSS downlink reference signal, measure the receiving time point of the uplink reference signal, and report a time difference between the measured time point and the receiving time point of the uplink reference signal.

For example, the UE measures a time difference between a time point at which the UE receives a frame in the GNSS downlink reference signal and the time point at which the UE sends the uplink reference signal, and reports the time difference to the GNSS satellite.

It should be noted that the satellite 1 indicates the satellite 2 to measure a receiving time point of several frames, sub-frames, or words in the received GNSS downlink reference signal, and correspondingly, the satellite 1 also needs to indicate the UE to measure a receiving time point of the same frames, sub-frames, or words.

For another specific implementation, refer to the corresponding process in the embodiment 1. Details are not described herein again.

S330: The satellite 1 sends the first indication information and the second indication information to the satellite 2, and sends the first indication information and the third indication information to the UE, where the first indication information indicates the configuration of the first reference signal group, the second indication information indicates the geographical location-related information of the UE, and the third indication information indicates the location information of the satellite 2, where the location information of the satellite 2 includes the ephemeris and the orbit information of the satellite 2.

In this embodiment, the satellite 1 is a GNSS satellite, and the GNSS satellite keeps sending GNSS information. In this case, the satellite 1 may not configure a downlink reference signal, but only needs to configure an uplink reference signal.

In this embodiment, the satellite 1 is a GNSS satellite, and the GNSS satellite keeps sending ephemeris information and the like.

Therefore, in a possible implementation, the second indication information sent by the satellite 1 to the satellite 2 may not include ephemeris information of the satellite 1.

In a possible implementation, the first indication information sent by the satellite 1 to the satellite 2 and the UE indicates the configuration of the first reference signal group. The configuration of the reference signal may be a configuration of the uplink reference signal and association information of a reference signal pair. The association information of the reference signal pair refers to a downlink reference signal and an uplink reference signal that have an association relationship.

For another specific implementation, refer to the corresponding process in the embodiment 1. Details are not described herein again.

In S340 to S370, for a specific implementation, refer to the corresponding process in the embodiment 1. Details are not described herein again.

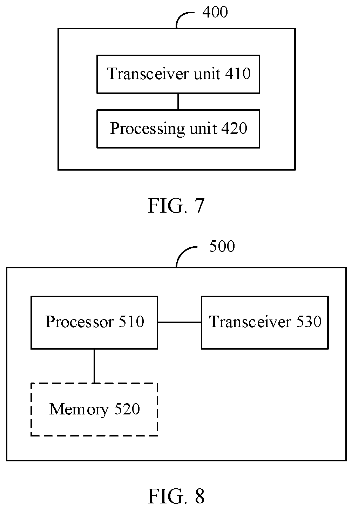

FIG. 7 is a schematic block diagram of a communication apparatus 400 according to an embodiment of this application. The apparatus 400 includes a transceiver unit 410 and a processing unit 420. The transceiver unit 410 may communicate with the outside, and the processing unit 420 is configured to perform data processing. The transceiver unit 410 may also be referred to as a communication interface or a communication unit.

In a possible implementation, the apparatus 400 may further include a storage unit. The storage unit may be configured to store instructions and/or data. The processing unit 420 may read the instructions and/or the data in the storage unit.

The apparatus 400 may be configured to perform an action performed by the satellite in the foregoing method embodiments. In this case, the apparatus 400 may be a satellite or a component that may be configured in the satellite. The transceiver unit 410 is configured to perform the sending/receiving-related operations on the satellite side in the foregoing method embodiments. The processing unit 420 is configured to perform the processing-related operation on the satellite side in the foregoing method embodiments.

Alternatively, the apparatus 400 may be configured to perform an action performed by the terminal device in the foregoing method embodiments. In this case, the apparatus 400 may be a terminal device or a component that may be configured in the terminal device. The transceiver unit 410 is configured to perform the sending/receiving-related operations on the terminal device side in the foregoing method embodiments. The processing unit 420 is configured to perform the processing-related operation on the terminal device side in the foregoing method embodiments.

As shown in FIG. 8, an embodiment of this application further provides a communication apparatus 500. The communication apparatus 500 includes a processor 510. The processor 510 is coupled to a memory 520. The memory 520 is configured to store a computer program or instructions and/or data. The processor 510 is configured to execute the computer program or the instructions and/or the data stored in the memory 520, so that the method in the foregoing method embodiments is performed.

In a possible implementation, the communication apparatus 500 includes one or more processors 510.

In a possible implementation, as shown in FIG. 8, the communication apparatus 500 may further include a memory 520.

In a possible implementation, the communication apparatus 500 may include one or more memories 520.

In a possible implementation, the memory 520 and the processor 510 may be integrated together, or may be disposed separately, or the processor 520 may be located outside the communication apparatus 500.

In a possible implementation, as shown in FIG. 8, the wireless communication apparatus 500 may further include a transceiver 530. The transceiver 530 is configured to receive and/or send a signal. For example, the processor 510 is configured to control the transceiver 530 to receive and/or send a signal.

In a solution, the communication apparatus 500 is configured to implement an operation performed by the satellite in the foregoing method embodiments.

For example, the processor 510 is configured to implement the processing-related operation performed by the satellite in the foregoing method embodiments, and the transceiver 530 is configured to implement the sending/receiving-related operations performed by the satellite in the foregoing method embodiments.

In another solution, the communication apparatus 500 is configured to implement an operation performed by the terminal device in the foregoing method embodiments.

For example, the processor 510 is configured to implement the processing-related operation performed by the terminal device in the foregoing method embodiments, and the transceiver 530 is configured to implement the sending/receiving-related operations performed by the terminal device in the foregoing method embodiments.

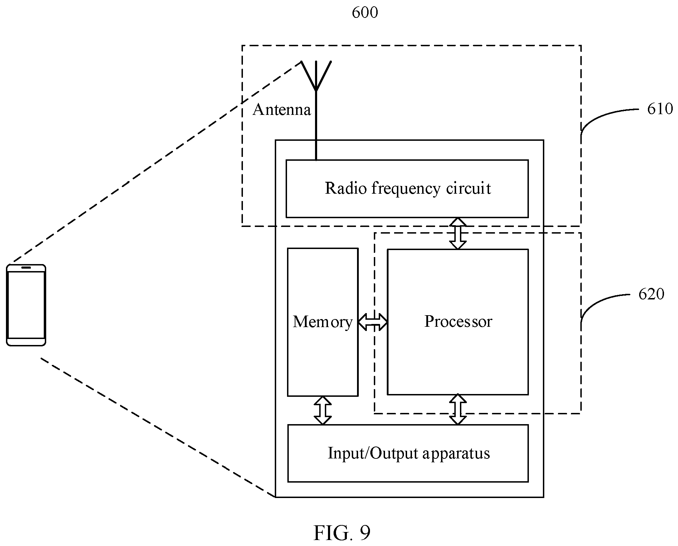

An embodiment of this application further provides a communication apparatus 600. The communication apparatus 600 may be a terminal device or may be a chip. The communication apparatus 600 may be configured to perform an operation performed by the terminal device in the foregoing method embodiments. When the communication apparatus 600 is a terminal device, FIG. 9 is a simplified diagram of a structure of the terminal device. For ease of understanding and illustration, in FIG. 9, an example in which the terminal device is a mobile phone is used. As shown in FIG. 9, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When data needs to be sent, after performing baseband processing on the to-be-sent data, the processor outputs a baseband signal to the radio frequency circuit. The radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 9 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 9, the terminal device includes a transceiver unit 610 and a processing unit 620. The transceiver unit 610 may also be referred to as a transceiver, a transceiver machine, a transceiver apparatus, or the like. The processing unit 620 may also be referred to as a processor, a processing board, a processing module, a processing apparatus, or the like.

In a possible implementation, a component that is in the transceiver unit 610 and that is configured to implement a receiving function may be considered as a receiving unit, and a component that is in the transceiver unit 610 and that is configured to implement a sending function may be considered as a sending unit. In other words, the transceiver unit 610 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiving circuit, or the like. The sending unit sometimes may also be referred to as a transmitter machine, a transmitter, a transmitting circuit, or the like.

For example, in an implementation, the transceiver unit 610 is configured to perform a receiving operation of the terminal device. The processing unit 620 is configured to execute a processing action on the terminal device side.

It should be understood that FIG. 9 is merely an example rather than a limitation. The terminal device including the transceiver unit and the processing unit may not depend on the structure shown in FIG. 9.

When the communication apparatus 600 is a chip, the chip includes a transceiver unit and a processing unit. The transceiver unit may be an input/output circuit or a communication interface. The processing unit may be a processor, a microprocessor, or an integrated circuit integrated on the chip. The input circuit may be an input pin, the output circuit may be an output pin, and a processing circuit may be a transistor, a gate circuit, a trigger, various logic circuits, or the like. An input signal received by the input circuit may be received and input by, for example without limitation to, a receiver, and a signal output by the output circuit may be output to and transmitted by, for example without limitation to, a transmitter; and the input circuit and the output circuit may be different circuits or may be a same circuit. In this case, the circuit is used as the input circuit and the output circuit respectively at different moments.

An embodiment of this application further provides a communication apparatus 700. The communication apparatus 700 may be a satellite or a chip. The communication apparatus 700 may be configured to perform an operation performed by the satellite in the foregoing method embodiments.

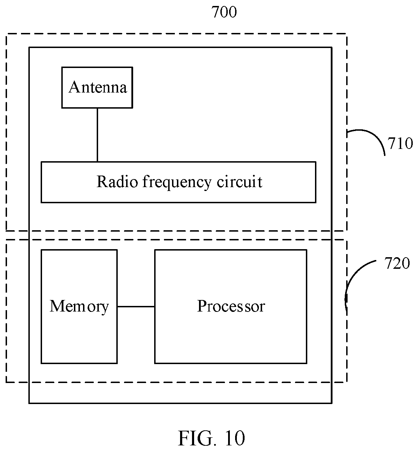

When the communication apparatus 700 is a satellite, for example, a satellite base station, FIG. 10 is a simplified diagram of a structure of the base station. The base station includes a part 710 and a part 720. The part 710 is mainly configured to receive and send a radio frequency signal, and perform conversion between the radio frequency signal and a baseband signal. The part 720 is mainly used for baseband processing, control a base station, and the like. The part 710 may be usually referred to as a transceiver unit, a transceiver machine, a transceiver circuit, a transceiver, or the like. The part 720 is usually a control center of the base station, and may be usually referred to as a processing unit, and is configured to control the base station to perform a processing operation on the communication apparatus side in the foregoing method embodiments.

The transceiver unit of the part 710 may also be referred to as a transceiver machine, a transceiver, or the like, and includes an antenna and a radio frequency circuit. The radio frequency circuit is mainly configured to perform radio frequency processing. In a possible implementation, in the part 710, a component is configured to implement a receiving function may be considered as a receiving unit, and a component configured to implement a sending function may be considered as a sending unit. In other words, the part 710 includes the receiving unit and the sending unit. The receiving unit may also be referred to as a receiver machine, a receiver, a receiving circuit, or the like. The sending unit may be referred to as a transmitter machine, a transmitter, a transmitting circuit, or the like.

The part 720 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors simultaneously.

For example, in an implementation, the transceiver unit in the part 710 is configured to perform the sending/receiving-related steps performed by the satellite in embodiments. The part 720 is configured to perform the processing-related step performed by the satellite.

It should be understood that FIG. 10 is merely an example rather than a limitation. The communication apparatus including the transceiver unit and the processing unit may not depend on the structure shown in FIG. 10.

When the communication apparatus 700 is a chip, the chip includes a transceiver unit and a processing unit. The transceiver unit may be an input/output circuit or a communication interface. The processing unit is a processor, a microprocessor, or an integrated circuit integrated on the chip. The input circuit may be an input pin, the output circuit may be an output pin, and a processing circuit may be a transistor, a gate circuit, a trigger, various logic circuits, or the like. An input signal received by the input circuit may be received and input by, for example without limitation to, a receiver, and a signal output by the output circuit may be output to and transmitted by, for example without limitation to, a transmitter; and the input circuit and the output circuit may be different circuits or may be a same circuit. In this case, the circuit is used as the input circuit and the output circuit respectively at different moments.

An embodiment of this application further provides a computer-readable storage medium. The computer-readable storage medium stores computer instructions used to implement the method performed by the terminal device or the method performed by the satellite in the foregoing method embodiments.

For example, when the computer program is executed by a computer, the computer is enabled to implement the method performed by the terminal device or the method performed by the satellite in the foregoing method embodiments.

An embodiment of this application further provides a computer program product including instructions. When the instructions are executed by a computer, the computer is enabled to implement the method performed by the terminal device or the method performed by the communication apparatus in the foregoing method embodiments.

An embodiment of this application further provides a communication system. The communication system includes the satellite and the terminal device in the foregoing embodiments.

For explanations and beneficial effects of related content of any wireless communication apparatus provided above, refer to the corresponding method embodiment provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that communication can be performed according to the method provided in embodiments of this application by running a program that records code of the method provided in embodiments of this application. For example, the execution body of the method provided in embodiments of this application may be a terminal device or a satellite, or may be a functional module that is in the terminal device or the satellite and that can invoke and execute the program.

Aspects or features in embodiments of this application may be implemented as a method, an apparatus, or a product that uses standard programming and/or engineering technologies. The term "product" used in this application may cover a computer program that can be accessed from any computer-readable component, carrier, or medium. For example, a computer-readable medium may include, but is not limited to: a magnetic storage device (for example, a hard disk, a floppy disk, or a magnetic tape), an optical disc (for example, a compact disc (compact disc, CD), a digital versatile disc (digital versatile disc, DVD), or the like), a smart card, and a flash memory device (for example, an erasable programmable read-only memory (erasable programmable read-only memory, EPROM), a card, a stick, or a key drive).

The various storage media described herein may represent one or more devices and/or other machine-readable media for storing information. The term "machine-readable medium" may include but is not limited to a wireless channel, and various other media that can store, contain, and/or carry instructions and/or data.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, a part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in embodiments of this application shall fall within the protection scope of this application.

Therefore, the protection scope of this application shall be subject to the protection scope of the claims.

**Claims**

1. A positioning method, comprising:

    obtaining, by a first communication apparatus, first information, wherein the first information corresponds to a first reference signal group, and the first reference signal group comprises one uplink reference signal, one first downlink reference signal, and one second downlink reference signal; and the first information comprises first time difference information and first location information, wherein the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal;
    receiving, by the first communication apparatus, second information, wherein the second information corresponds to the first reference signal group; and the second information comprises second time difference information and second location information, wherein the second time difference information indicates a time difference between a time point at which the second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal;
    receiving, by the first communication apparatus, third information, wherein the third information corresponds to the first reference signal group; and the third information comprises third time difference information, wherein the third time difference information indicates a time difference between a time point at which the third communication apparatus receives the second downlink reference signal and a time point at which the third communication apparatus sends the uplink reference signal; and
    positioning, by the first communication apparatus, the third communication apparatus based on the first information, the second information, and the third information.

2. The method according to claim 1, wherein the first downlink reference signal and the second downlink reference signal are same reference signals.

3. The method according to claim 1 or 2, wherein the method further comprises:
   sending, by the first communication apparatus, first indication information to the second communication apparatus and the third communication apparatus, wherein the first indication information indicates a configuration of the first reference signal group.

4. The method according to any one of claims 1 to 3, wherein the method further comprises:
   sending, by the first communication apparatus, second indication information to the second communication apparatus, wherein the second indication information indicates geographical location information, and the geographical location information indicates a cell identity ID or a beam position ID of the third communication apparatus.

5. The method according to claim 4, wherein the second indication information further indicates an ephemeris of the first communication apparatus, and the ephemeris of the first communication apparatus comprises information about an operating orbit of the first communication apparatus.

6. The method according to any one of claims 1 to 5, wherein the method further comprises:
   sending, by the first communication apparatus, third indication information to the third communication apparatus, wherein the third indication information indicates location information of the second communication apparatus, and the location information of the second communication apparatus comprises an ephemeris and orbit information of the second communication apparatus.

7. The method according to any one of claims 1 to 6, wherein the method further comprises:

    sending, by the first communication apparatus, first scheduling information to the second communication apparatus, wherein the first scheduling information indicates the second communication apparatus to obtain and send the second information; and

sending, by the first communication apparatus, second scheduling information to the third communication apparatus, wherein the second scheduling information indicates the third communication apparatus to obtain and send the third information.

8. A positioning method, comprising:

obtaining, by a second communication apparatus, second information, wherein the second information corresponds to a first reference signal group; the first reference signal group comprises one uplink reference signal, one first downlink reference signal, and one second downlink reference signal; and the second information comprises second time difference information and second location information, wherein the second time difference information indicates a time difference between a time point at which the second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal;

sending, by the second communication apparatus, the second information to a first communication apparatus, wherein the first communication apparatus is configured to position a third communication apparatus based on first information, the second information, and third information, wherein

the first information corresponds to the first reference signal group, and the first information comprises first time difference information and first location information, wherein the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal; and

the third information corresponds to the first reference signal group, and the third information comprises third time difference information, wherein the third time difference information indicates a time difference between a time point at which the third communication apparatus receives the second downlink reference signal and a time point at which the third communication apparatus sends the uplink reference signal.

9. The method according to claim 8, wherein the first downlink reference signal and the second downlink reference signal are same reference signals.

10. The method according to claim 8 or 9, wherein the method further comprises:
receiving, by the second communication apparatus, first scheduling information, wherein the first scheduling information indicates the second communication apparatus to obtain and send the second information.

11. The method according to any one of claims 8 to 10, wherein the method further comprises:
receiving, by the second communication apparatus, first indication information, wherein the first indication information indicates a configuration of the first reference signal group.

12. The method according to any one of claims 8 to 11, wherein the method further comprises:
receiving, by the second communication apparatus, second indication information, wherein the second indication information indicates geographical location information, and the geographical location information indicates a cell identity ID or a beam position ID of the third communication apparatus.

13. The method according to claim 12, wherein the second indication information further indicates an ephemeris of the first communication apparatus, and the ephemeris of the first communication apparatus comprises information about an operating orbit of the first communication apparatus.

14. The method according to any one of claims 8 to 13, wherein the method further comprises:

determining, by the second communication apparatus, a first time window based on the first indication information and the second indication information, wherein the first time window is used for receiving the first reference signal group; and

receiving, by the second communication apparatus, the first reference signal group in the first time window.

**15.** A positioning method, comprising:

obtaining, by a third communication apparatus, third information, wherein the third information corresponds to a first reference signal group; the first reference signal group comprises one uplink reference signal, one first downlink reference signal, and one second downlink reference signal; and the third information comprises third time difference information, wherein the third time difference information indicates a time difference between a time point at which the third communication apparatus receives the second downlink reference signal and a time point at which the third communication apparatus sends the uplink reference signal; and

sending, by the third communication apparatus, the third information to a first communication apparatus, wherein the first communication apparatus is configured to position the third communication apparatus based on first information, second information, and the third information, wherein

the first information corresponds to the first reference signal group, and the first information comprises first time difference information and first location information, wherein the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal; and

the second information corresponds to the first reference signal group, and the second information comprises second time difference information and second location information, wherein the second time difference information indicates a time difference between a time point at which a second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal.

**16.** The method according to claim 15, wherein the first downlink reference signal and the second downlink reference signal are same reference signals.

**17.** The method according to claim 15 or 16, wherein the method further comprises:
receiving, by the third communication apparatus, first indication information, wherein the first indication information indicates a configuration of the first reference signal group.

**18.** The method according to any one of claims 15 to 17, wherein the method further comprises:
receiving, by the third communication apparatus, third indication information, wherein the third indication information indicates location information of the second communication apparatus, and the location information of the second communication apparatus comprises an ephemeris and orbit information of the second communication apparatus.

**19.** The method according to any one of claims 15 to 18, wherein the method further comprises:
receiving, by the third communication apparatus, second scheduling information, wherein the second scheduling information indicates the third communication apparatus to obtain and send the third information.

**20.** A positioning apparatus, comprising:

an obtaining module, configured to obtain first information, wherein the first information corresponds to a first reference signal group, and the first reference signal group comprises one uplink reference signal, one first downlink reference signal, and one second downlink reference signal; and the first information comprises first time difference information and first location information, wherein the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal;

a transceiver module, configured to receive second information, wherein the second information corresponds to the first reference signal group; and the second information comprises second time difference information and second location information, wherein the second time difference information indicates a time difference between a time point at which the second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal, wherein

the transceiver module is further configured to receive third information, wherein the third information corresponds to the first reference signal group; and the third information comprises third time difference information, wherein the third time difference information indicates a time difference between a time point at which the third communication apparatus receives the second downlink reference signal and a time point at which the third communication apparatus sends the uplink reference signal; and

a processing module, configured to position the third communication apparatus based on the first information, the second information, and the third information.

21. The apparatus according to claim 20, wherein the first downlink reference signal and the second downlink reference signal are same reference signals.

22. The apparatus according to claim 20 or 21, wherein the transceiver module is further configured to send first indication information to the second communication apparatus and the third communication apparatus, wherein the first indication information indicates a configuration of the first reference signal group.

23. The apparatus according to any one of claims 20 to 22, wherein the transceiver module is further configured to send second indication information to the second communication apparatus, wherein the second indication information indicates geographical location information, and the geographical location information indicates a cell identity ID or a beam position ID of the third communication apparatus.

24. The apparatus according to claim 23, wherein the second indication information further indicates an ephemeris of the first communication apparatus, and the ephemeris of the first communication apparatus comprises information about an operating orbit of the first communication apparatus.

25. The apparatus according to any one of claims 20 to 24, wherein the transceiver module is further configured to send third indication information to the third communication apparatus, wherein the third indication information indicates location information of the second communication apparatus, and the location information of the second communication apparatus comprises an ephemeris and orbit information of the second communication apparatus.

26. The apparatus according to any one of claims 20 to 25, wherein the transceiver module is further configured to send first scheduling information to the second communication apparatus, wherein the first scheduling information indicates the second communication apparatus to obtain and send the second information; and

the transceiver module is further configured to send second scheduling information to the third communication apparatus, wherein the second scheduling information indicates the third communication apparatus to obtain and send the third information.

27. A positioning apparatus, comprising:

an obtaining module, configured to obtain second information, wherein the second information corresponds to a first reference signal group; the first reference signal group comprises one uplink reference signal, one first downlink reference signal, and one second downlink reference signal; and the second information comprises second time difference information and second location information, wherein the second time difference information indicates a time difference between a time point at which a second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal; and

a transceiver module, configured to send the second information to a first communication apparatus, wherein the first communication apparatus is configured to position a third communication apparatus based on the first information, the second information, and third information, wherein

the first information corresponds to the first reference signal group, and the first information comprises first time difference information and first location information, wherein the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal; and
the third information corresponds to the first reference signal group, and the third information comprises third time difference information, wherein the third time difference information indicates a time difference between a time point at which the third communication apparatus receives the second downlink reference signal and a time point at which the third communication apparatus sends the uplink reference signal.

28. The apparatus according to claim 27, wherein the first downlink reference signal and the second downlink reference signal are same reference signals.

29. The apparatus according to claim 27 or 28, wherein the transceiver module is further configured to receive first scheduling information, wherein the first scheduling information indicates the second communication apparatus to obtain and send the second information.

30. The apparatus according to any one of claims 27 to 29, wherein the transceiver module is further configured to receive first indication information, wherein the first indication information indicates a configuration of the first reference signal group.

31. The apparatus according to any one of claims 27 to 30, wherein the transceiver module is further configured to receive second indication information, wherein the second indication information indicates geographical location information, and the geographical location information indicates a cell identity ID or a beam position ID of the third communication apparatus.

32. The apparatus according to claim 31, wherein the second indication information further indicates an ephemeris of the first communication apparatus, and the ephemeris of the first communication apparatus comprises information about an operating orbit of the first communication apparatus.

33. The apparatus according to any one of claims 27 to 32, wherein the apparatus further comprises:

a processing unit, configured to determine a first time window based on the first indication information and the second indication information, wherein the first time window is used for receiving the first reference signal group, wherein
the transceiver module receives the first reference signal group in the first time window.

34. A positioning apparatus, comprising:

an obtaining module, configured to obtain third information, wherein the third information corresponds to a first reference signal group; the first reference signal group comprises one uplink reference signal, one first downlink reference signal, and one second downlink reference signal; and the third information comprises third time difference information, wherein the third time difference information indicates a time difference between a time point at which the third communication apparatus receives the second downlink reference signal and a time point at which the third communication apparatus sends the uplink reference signal; and
a transceiver module, configured to send the third information to a first communication apparatus, wherein the first communication apparatus is configured to position the third communication apparatus based on first information, second information, and the third information, wherein
the first information corresponds to the first reference signal group, and the first information comprises first time difference information and first location information, wherein the first time difference information indicates a time difference between a time point at which the first communication apparatus receives the uplink reference signal and a time point at which the first communication apparatus sends the first downlink reference signal and the second downlink reference signal, and the first location information indicates a location at which the first communication apparatus receives the uplink reference signal and a location at which the first communication apparatus sends the first downlink reference signal and the second downlink reference signal; and
the second information corresponds to the first reference signal group, and the second information comprises second time difference information and second location information, wherein the second time difference information indicates a time difference between a time point at which a second communication apparatus receives the first downlink reference signal and a time point at which the second communication apparatus receives the uplink reference signal, and the second location information indicates a location at which the second communication apparatus receives the first downlink reference signal and a location at which the second communication apparatus receives the uplink reference signal.

35. The apparatus according to claim 34, wherein the first downlink reference signal and the second downlink reference signal are same reference signals.

36. The apparatus according to claim 34 or 35, wherein the transceiver module is further configured to receive first indication information, wherein the first indication information indicates a configuration of the first reference signal group.

37. The apparatus according to any one of claims 34 to 36, wherein the transceiver module is further configured to receive third indication information, wherein the third indication information indicates location information of the second communication apparatus, and the location information of the second communication apparatus comprises an ephemeris and orbit information of the second communication apparatus.

38. The apparatus according to any one of claims 34 to 37, wherein the transceiver module is further configured to receive second scheduling information, wherein the second scheduling information indicates the third communication apparatus to obtain and send the third information.

39. A computer program product, wherein the computer program product comprises computer program code; and when the computer program code is run, an apparatus is enabled to perform

the method according to any one of claims 1 to 7,
the method according to any one of claims 8 to 14, or
the method according to any one of claims 15 to 19.

40. A computer-readable storage medium, wherein the computer-readable storage medium stores a computer program; and when the computer program is run,

an apparatus is enabled to perform the method according to any one of claims 1 to 7,
an apparatus is enabled to perform the method according to any one of claims 8 to 14, or
an apparatus is enabled to perform the method according to any one of claims 15 to 19.

41. A chip system, comprising a processor, configured to invoke a computer program from a memory and run the computer program,

to enable a communication apparatus on which the chip system is installed to perform the method according to any one of claims 1 to 7;
to enable a communication apparatus on which the chip system is installed to perform the method according to any one of claims 8 to 14; or
to enable a communication apparatus on which the chip system is installed to perform the method according to any one of claims 15 to 19.

42. A communication system, comprising a first communication apparatus, a second communication apparatus, and a third communication apparatus, wherein the first communication apparatus is configured to perform the method according to any one of claims 1 to 7, the second communication apparatus is configured to perform the method according to any one of claims 8 to 14, and the third communication apparatus is configured to perform the method according to any one of claims 15 to 19.

FIG. 1

Air
interface

Air
interface

Base
station   NG

Core
network

Data
network

Terrestrial
station

(a)

Base
station

Air
interface      NG

NG

Core
network

Data
network

Terrestrial
station

(b)

Base
station

Air
interface      NG

NG

Core
network

Data
network

Terrestrial
station

Xn
interface

Air
interface

Base
station

(c)

FIG. 2

AL

BL

BL

BL

BL

BL

Terminal 2     AL     IAB node 5

IAB node 2

IAB node 1

AL

BL

BL

Terminal 1     IAB node 4     IAB node 3

Donor node

FIG. 3

FIG. 4

200

| First communication apparatus | Second communication apparatus | Third communication apparatus |

S210: Configure a first reference signal pair

S220-1: Send first scheduling information

S220-2: Send second scheduling information

S230-1: Send first indication information

S230-2: Send second indication information

S230-3: Send third indication information

S240: Configure a time window based on the first indication information and the second indication information

S250-1: Send a first downlink reference signal

S250-2: Send a second downlink reference signal

$\Delta_1$

$\Delta_2$

$\Delta_3$

S250-3: Send an uplink reference signal

S260-1: Send third information

S260-2: Send second information

S270: Determine a spatial location of the third communication apparatus

FIG. 5

300

| First communication apparatus | Second communication apparatus | Third communication apparatus |
|---|---|---|

S310: Configure an uplink reference signal in a first reference signal pair

S320-1: Send first scheduling information

S320-2: Send second scheduling information

S330-1: Send first indication information

S330-2: Send second indication information

S330-3: Send third indication information

S340: Configure a time window based on the first indication information and the second indication information

S350-1: Send a first downlink reference signal

S350-2: Send a second downlink reference signal

$\Delta_1$

$\Delta_2$

$\Delta_3$

S350-3: Send the uplink reference signal

S360-1: Send third information

S360-2: Send second information

S370: Determine a spatial location of the third communication apparatus

FIG. 6

400

Transceiver unit 410

Processing unit 420

FIG. 7

500

Processor 510

Transceiver 530

Memory 520

FIG. 8

600

Antenna

Radio frequency circuit

610

Memory

Processor

620

Input/Output apparatus

FIG. 9

700

Antenna

Radio frequency circuit

710

720

Memory

Processor

FIG. 10

## INTERNATIONAL SEARCH REPORT

| International application No. |
|---|
| **PCT/CN2023/134745** |

**A. CLASSIFICATION OF SUBJECT MATTER**

G01S5/02(2010.01)i; H04W64/00(2009.01)i

According to International Patent Classification (IPC) or to both national classification and IPC

**B. FIELDS SEARCHED**

Minimum documentation searched (classification system followed by classification symbols)

IPC: G01S5/+; H04W64/+

Documentation searched other than minimum documentation to the extent that such documents are included in the fields searched

Electronic data base consulted during the international search (name of data base and, where practicable, search terms used)

WPABS, CNTXT, CNKI: 定位, 终端, 设备, 基站, 通信, 时间差, 上行, 下行, 同步, 位置, 参考, 辅助, position+, terminal, equipment, station, UE, communicaiotn, time difference, UP, down, synchronization, location, reference, assist

**C. DOCUMENTS CONSIDERED TO BE RELEVANT**

| Category* | Citation of document, with indication, where appropriate, of the relevant passages | Relevant to claim No. |
|---|---|---|
| A | CN 111586832 A (CHENGDU HUAWEI TECHNOLOGIES CO., LTD.) 25 August 2020 (2020-08-25)<br>description, paragraphs 93 and 95-172 | 1-42 |
| A | CN 115134739 A (VIVO COMMUNICATION TECHNOLOGY CO., LTD.) 30 September 2022 (2022-09-30)<br>entire document | 1-42 |
| A | CN 102958154 A (HUAWEI TECHNOLOGIES CO., LTD.) 06 March 2013 (2013-03-06)<br>entire document | 1-42 |
| A | CN 110166501 A (HUAWEI TECHNOLOGIES CO., LTD.) 23 August 2019 (2019-08-23)<br>entire document | 1-42 |
| A | EP 3968708 A2 (BLACKBERRY LTD.) 16 March 2022 (2022-03-16)<br>entire document | 1-42 |
| A | JP 2015126412 A (NTT DOCOMO, INC.) 06 July 2015 (2015-07-06)<br>entire document | 1-42 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 February 2024** | **21 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/134745**

**C.    DOCUMENTS CONSIDERED TO BE RELEVANT**

| Category* | Citation of document, with indication, where appropriate, of the relevant passages | Relevant to claim No. |
|---|---|---|
| A | CN 115134739 A (VIVO COMMUNICATION TECHNOLOGY CO., LTD.) 30 September 2022 (2022-09-30)<br>entire document | 1-42 |

Form PCT/ISA/210 (second sheet) (July 2022)

## INTERNATIONAL SEARCH REPORT
### Information on patent family members

International application No.

**PCT/CN2023/134745**

| Patent document cited in search report | | | Publication date (day/month/year) | Patent family member(s) | | | Publication date (day/month/year) |
|---|---|---|---|---|---|---|---|
| CN | 111586832 | A | 25 August 2020 | None | | | |
| CN | 115134739 | A | 30 September 2022 | None | | | |
| CN | 102958154 | A | 06 March 2013 | US | 2014171111 | A1 | 19 June 2014 |
| | | | | US | 9332443 | B2 | 03 May 2016 |
| | | | | WO | 2013026407 | A1 | 28 February 2013 |
| | | | | EP | 2747498 | A1 | 25 June 2014 |
| | | | | EP | 2747498 | A4 | 15 April 2015 |
| | | | | EP | 2747498 | B1 | 30 October 2019 |
| CN | 110166501 | A | 23 August 2019 | EP | 3742764 | A1 | 25 November 2020 |
| | | | | EP | 3742764 | A4 | 10 March 2021 |
| | | | | WO | 2019154149 | A1 | 15 August 2019 |
| | | | | US | 2020374658 | A1 | 26 November 2020 |
| | | | | US | 11523252 | B2 | 06 December 2022 |
| EP | 3968708 | A2 | 16 March 2022 | EP | 3515136 | A1 | 24 July 2019 |
| | | | | EP | 3515136 | B1 | 20 October 2021 |
| | | | | ES | 2569036 | T3 | 06 May 2016 |
| | | | | EP | 2594103 | A2 | 22 May 2013 |
| | | | | EP | 2594103 | A4 | 05 March 2014 |
| | | | | EP | 2594103 | B1 | 23 March 2016 |
| | | | | JP | 2013536616 | A | 19 September 2013 |
| | | | | JP | 5624212 | B2 | 12 November 2014 |
| | | | | US | 2015141048 | A1 | 21 May 2015 |
| | | | | US | 9155063 | B2 | 06 October 2015 |
| | | | | KR | 20120008431 | A | 30 January 2012 |
| | | | | KR | 101191215 | B1 | 15 October 2012 |
| | | | | US | 2012015667 | A1 | 19 January 2012 |
| | | | | US | 8989768 | B2 | 24 March 2015 |
| | | | | EP | 3041301 | A1 | 06 July 2016 |
| | | | | EP | 3041301 | B1 | 27 March 2019 |
| | | | | EP | 3968708 | A3 | 08 June 2022 |
| | | | | ES | 2729163 | T3 | 30 October 2019 |
| | | | | WO | 2012008727 | A2 | 19 January 2012 |
| | | | | WO | 2012008727 | A3 | 05 April 2012 |
| JP | 2015126412 | A | 06 July 2015 | WO | 2015098456 | A1 | 02 July 2015 |
| | | | | US | 2016337993 | A1 | 17 November 2016 |
| | | | | JP | 6325249 | B2 | 16 May 2018 |

Form PCT/ISA/210 (patent family annex) (July 2022)

**REFERENCES CITED IN THE DESCRIPTION**

**Patent documents cited in the description**

- CN 202211509436